# EUROPÄISCHE PATENTSCHRIFT

(11) **EP 4 276 021 B1**
(45) Veröffentlichungstag und Bekanntmachung des Hinweises auf die Patenterteilung: **18.06.2025**
(21) Anmeldenummer: 23154678.9
(22) Anmeldetag: 02.02.2023
(51) Int. Cl.: B65B 5/08, B65G 47/91, B65B 35/58, B65B 35/50, B65B 35/44, B65B 35/38, B65B 29/02, B65B 5/10, B25J 15/00, B25J 9/00, B25J 15/06, B65B 21/02, B65B 21/20, B65G 47/08

(54) **VERPACKUNGSMASCHINE MIT EINER GRUPPIER-VORRICHTUNG SOWIE VERFAHREN ZUM ERZEUGEN VON EINLAGIGEN GRUPPEN SICH TEILWEISE ÜBERLAPPENDER PRODUKTE**
PACKAGING MACHINE WITH GROUPING DEVICE AND METHOD FOR CREATING SINGLE-PLY GROUPS OF PRODUCTS THAT PARTIALLY OVERLAP ONE ANOTHER
MACHINE D'EMBALLAGE DOTÉE D'UN DISPOSITIF DE REGROUPEMENT ET PROCÉDÉ DE PRODUCTION DE GROUPES MONOCOUCHE DE PRODUITS SE CHEVAUCHANT PARTIELLEMENT

(30) Priorität: 14.04.2022 DE 102022109282
(43) Veröffentlichungstag der Anmeldung: 15.11.2023
(73) Patentinhaber: Gerhard Schubert GmbH, 74564 Crailsheim (DE)
(72) Erfinder: Brand, Sebastian, 74589 Satteldorf (DE)
(74) Vertreter: Weickmann & Weickmann PartmbB

(56) Entgegenhaltungen:
- WO-A1-2015/075571
- US-A1- 2012 233 967

## Beschreibung

### I. Anwendungsgebiet

Die Erfindung betrifft eine Gruppier-Vorrichtung sowie ein Verfahren zum Erzeugen von einlagigen Produkten, bei denen sich die Produkte innerhalb der Lage, insbesondere in Längs- und Querrichtung, teilweise einander überlappen.

### II. Technischer Hintergrund

Solche Gruppen werden insbesondere in Verpackungsmaschinen benötigt, weil dort Produkte häufig in einer bestimmten Gruppen-Anordnung in Umverpackungen wie Schachteln oder Kartons eingebracht werden müssen.

Unabhängig davon besteht die Aufgabe, den Aufwand für die Bildung der Gruppen möglichst gering zu halten, also beispielsweise die Anzahl der Antriebe hierfür gering zu halten oder die Anzahl der Roboter oder anderer Handhabungs-Einrichtungen für die Produkte - wobei im Folgenden im Rahmen der Anmeldung Roboter alle anderen Arten von Handhabungs-Einrichtungen miteinschließen soll - möglichst gering zu halten.

Dies gilt vor allem für das an einem Roboter befestigte Werkzeug, welches vom Roboter bewegt werden muss und deshalb möglichst kompakt und vor allem leicht ausgebildet sein soll, um das Beschleunigen aus dem Stand und Abbremsen bis zum Stand möglichst leicht zu machen.

Eine solche Gruppenbildung und die entsprechende Gruppier-Vorrichtung wird umso komplizierter, wenn die Gruppe nicht nur aus einlagig nebeneinanderstehenden Produkten besteht, sondern beispielsweise aus Produkten unterschiedlicher Orientierung, um eine möglichst hohe Packungsdichte in der Umverpackung zu erzielen.

Gerade nicht zylindrische oder quader-förmige Produkte, sondern sich in einer Raumrichtung verjüngende Produkte von Weinflaschen über Eistüten bis kegelstumpf-förmigen Kaffee-Kapseln können auf diese Art und Weise dichter gepackt werden, beispielsweise bei einer einlagigen, zweidimensionalen Gruppe von Kaffee-Kapseln, indem in Längs- und Querrichtung, also in den Reihen und Spalten, jeweils abwechselnd eine normal stehende und eine auf dem Kopf stehende Kaffee-Kapsel angeordnet werden.

Noch schwieriger ist die Situation, wenn solche Produkte mit unterschiedlicher Orientierung in der Gruppe auch - z.B. in der Aufsicht betrachtet - einander teilweise überlappend gruppiert werden sollen, um eine noch höhere Packungsdichte zu erzielen.

In diesem Zusammenhang sind prinzipiell bereits sowohl Spreiztische als auch Spreiz-Werkzeuge an einem Roboter bekannt, die jeweils Tragelemente, meist Tragleisten, aufweisen, entlang deren sich mehrere Greifer wie etwa Sauger zum Halten je eines Produktes befinden, wobei der gegenseitige Abstand, bei Tragleisten der Querabstand der parallel zueinander liegenden Tragleisten, verändert werden kann. Ein solcher Spreiztisch ist z.B. aus US 2012/233967 A1 bekannt.

Während bei einem Spreiztisch die Anzahl der Antriebe zwar die Komplexität erhöht, aber das damit auch zunehmende Gewicht von untergeordneter Rolle ist, ist eine solche Gewichtszunahme beim Werkzeug eines Roboters sehr nachteilig wegen der dadurch sinkenden Arbeitsgeschwindigkeit des Roboters.

In diesem Zusammenhang ist es auch bekannt, die Gruppier-Bewegungen zum Bilden der gewünschten Gruppe zu verteilen auf einen Spreiztisch einerseits und ein Roboter-Werkzeug andererseits.

In aller Regel wird von einem Zufuhr-Roboter ein Zufuhr-Set von Produkten aus einem Anliefer-Bereich, indem die Produkte in einer oder mehreren Reihen angeliefert werden, umgesetzt auf den Spreiztisch, und von dort mittels eines Abfuhr-Roboter abgenommen und abgelegt, häufig direkt in einer Umverpackung wie einer Schachtel oder einem Karton, kann das Werkzeug eines oder beider der Roboter ein Spreiz-Werkzeug sein.

Unter Spreizen soll nicht nur verstanden werden, dass hierdurch der Querabstand zwischen den Produkt-Trägern oder Greifern von einem Ausgangszustand auch aktiv aufgeweitet werden kann, sondern auch der umgekehrte Fall, dass der Ausgangszustand die beabstandete Funktionsstellung ist und an einer Spreizstation die Produkt-Träger oder Greifer-Träger gegeneinander angenähert werden.

Wenn die Produkte alle in der gleichen Orientierung, also auf dem Fuß stehend, angeliefert werden, muss die Gruppier-Vorrichtung zusätzlich einen Wender umfassen, der zumindest einen Teil der Produkte in eine auf dem Kopf stehende Orientierung wendet.

### III. Darstellung der Erfindung

### a) Technische Aufgabe

Es ist daher die Aufgabe gemäß der Erfindung, eine Verpackungs-Maschine mit einer Gruppier-Vorrichtung sowie ein Betriebsverfahren hierfür zur Verfügung zu stellen, bei dem vor allem die Gruppiervorrichtung möglichst einfach und funktionssicher aufgebaut ist und einen schnellen Betrieb der Gruppier-Vorrichtung, insbesondere der gesamten Verpackungs-Maschine ermöglicht, insbesondere aufgrund eines möglichst geringen Gewichts des Roboter-Werkzeuges an einem der Umsetz-Roboter.

### b) Lösung der Aufgabe

Diese Aufgabe wird durch die Merkmale der Ansprüche 1 und 12 gelöst. Vorteilhafte Ausführungsformen ergeben sich aus den Unteransprüchen.

Eine gattungsgemäße Verpackungsmaschine soll dem Erzeugen einer mehrreihigen, einlagigen Gruppe von Produkten, insbesondere auf einem Spreiztisch, dienen, wobei die Produkte innerhalb der Gruppe in der Aufsicht betrachtet in Querrichtung einander teilweise überlappen, sowie dem Einsetzen der Gruppe oder von Teilen der Gruppe, den Abfuhr-Sets, die insbesondere in Längsrichtung aus mehreren sogenannten Karton-Arrays für je einen Karton, in eine Umverpackung, etwa einen Karton.

Im Folgenden wird zur Vereinfachung nur noch von Kartons gesprochen, was - auch im vorangehenden Text - alle Arten von Umverpackungen mit einschließen soll.

Das seitliche Überlappen dient dem Erhöhen der Packungsdichte und ist insbesondere dann sinnvoll, wenn die Produkte keinen gleichmäßigen Querschnitt entlang ihrer Höhe aufweisen, wie etwa bei Kaffeekapseln, die insbesondere dann seitlich gut überlappend werden können, wenn benachbarte Kaffeekapseln abwechselnd auf dem Kopf oder auf dem Fuß stehen, sobald dass der einseitige breite Rand sich einmal oben und einmal unten befindet.

Die Verpackungsmaschine kann bekanntermaßen eine Gruppier-Vorrichtung aufweisen mit
- wenigstens einem Spreiztisch mit einem Grundkörper und mehreren in ihrem Querabstand verstellbaren, Leisten-förmigen Tragleisten, die jeweils mindestens eine in Längsrichtung verlaufende Reihe von Sitzen für je ein Produkt aufweisen,
- wenigstens einem Quer-Antrieb zum Verstellen des Querabstandes.

Die etwa horizontal liegenden Tragleisten befinden sich meist auf der Oberseite des Grundkörpers des Spreiztisches, und die Querrichtung, in der der Querabstand vorliegt und verstellt werden kann, verläuft vorzugsweise im rechten Winkel zur Längsrichtung.

Solche Spreiztische sind vielfältig bekannt, um den Abstand der Reihen von Sitzen von einem Zufuhr-Abstand, in der er insbesondere mit dem Reihen-Abstand der Reihen von Greifern eines beladenden Zufuhr-Roboters übereinstimmt, auf einen Abfuhr-Abstand, der insbesondere mit dem Reihen-Abstand der Reihen von Greifern eines insbesondere den Spreiztisch entladenden Abfuhr-Roboters übereinstimmt, verstellt werden kann.

Dieses sogenannte Spreizen, also Verändern des Querabstandes der Reihen von Sitzen und damit der Tragleisten, in denen sie angeordnet sind - kann alternativ auch im Werkzeug eines Umsetz- Roboters vorgesehen werden, einem dann sogenannten Spreiz-Werkzeug, jedoch wird dann das Roboter-Werkzeug hierdurch schwer und kompliziert, was dem Ziel eines möglichst leichten und leicht zu beschleunigenden Werkzeuges am Roboter widerspricht, sodass zumindest ein Teil der beim Umsetzen durchzuführenden Manipulationen an den Produkten in einen Spreiztisch ausgelagert werden.

Die Sitze, die je ein Produkt aufnehmen können, sind meist als Vertiefung in den Tragleisten ausgebildet.

Abgesehen von der Gruppier-Vorrichtung umfasst die Verpackungsmaschine in der Regel ferner
- einen Anliefer-Bereich, in dem die Produkte in einer oder mehreren Reihen angeliefert werden,
- einen Zufuhr-Bereich mit einem Zufuhr-Roboter zum Umsetzen eines Zufuhr-Sets aus Produkten vom Anliefer-Bereich auf den Spreiztisch,
- einen Abfuhr-Bereich mit einem Abfuhr-Roboter zum Umsetzen eines Abfuhr-Sets aus Produkten vom Spreiztisch weg direkt oder indirekt in die Umverpackung.

Dabei muss die Gruppe hinsichtlich Anzahl der Produkte und/oder Anzahl der Reihen und/oder Anzahl der Produkte pro Reihe nicht zwingend mit dem Zufuhr-Set und/oder dem Abfuhr-Set übereinstimmen, kann jedoch damit übereinstimmen. Gleiches gilt im Vergleich zwischen Zufuhr-Set und Abfuhr-Set. Ebenso muss die Gruppe hinsichtlich Anzahl der Produkte und/oder Anzahl der Reihen und/oder Anzahl der Produkte pro Reihe nicht zwingend mit dem Spreiztisch übereinstimmen, kann jedoch damit übereinstimmen.

So kann die zu erzeugende Gruppe, die insbesondere auf dem Spreiztisch zusammengestellt wird, beispielsweise 6 Reihen mit je 16 Produkten umfassen.

Ein Zufuhr-Set kann dagegen 2 Reihen mit je 16 Produkten umfassen, sodass 3 Zufuhr-Sets, meist zeitlich hintereinander, auf den zum Beispiel Spreiztisch aufgelegt werden um dort die zu erzeugende Gruppe zur Verfügung zu stellen.

Ein Abfuhr-Set kann dagegen 3 Reihen mit je 16 Produkten umfassen, mit denen beispielsweise gleichzeitig vier Kartons mit je 3 Reihen zu je 4 Produkten gefüllt werden.

Gerade bei mehrlagig gefüllten Kartons kann es vorkommen, dass zur Erreichung eines aus Marketinggründen vorgegebenen Inhalts des Kartons die oberste Lage beispielsweise nur 3 Reihen zu je 3 Produkten aufweist. Dann würde für das Ablegen als oberste Lage im Karton ein Abfuhr-Set 3 Reihen mit je 12 Produkten aufweisen.

Die überzähligen Produkte auf dem mit 6 Reihen mit je 16 Produkten besetzten Spreiztisch würden in einem Puffer, z.B. auf einem Puffer-Schlitten geparkt, aber weiterverwendet werden.

Unter einem Roboter wird jede Art von Handhabungseinrichtung verstanden.

Das Zufuhr-Set aus Produkten ist in der Regel ebenfalls eine einreihige oder zweireihige Gruppe von Produkten, die aber hinsichtlich Anzahl von Produkten und Anzahl von Reihen sowie Anordnung der Produkte nicht mit der zu erzeugenden Gruppe identisch sein muss.

In Längsrichtung entlang der Reihen von Sitzen besitzen diese vorzugsweise über alle, also in allen Tragleisten des Spreiztisches und bei mehreren Spreiz Tischen in allen Spreiztischen den gleichen Längsabstand zueinander.

Allerdings ist es möglich, dass der Abfuhr-Roboter diesen Längsabstand während des Umsetzens verändern kann, also es sich dabei um ein in Längsrichtung spreizfähiges Spreiz-Werkzeug handelt.

Erfindungsgemäß weist die Verpackungsmaschine, insbesondere deren Gruppier-Vorrichtung, insbesondere deren Spreiztisch, auf
- mehrere zweireihige oder noch mehr Reihen umfassende Tragleisten mit zwei Reihen von Sitzen für je ein Produkt und
- dazwischen wenigstens zwei relativ zueinander in Querrichtung bewegbare Tragleisten mit nur einer Reihe von Sitzen.

Unter einer zweireihigen Tragleiste wird jede eine oder mehrere Tragleiste verstanden, bei der die darauf angeordneten Reihen von Sitzen nicht in Querrichtung relativ zueinander beweglich sind. Ob diese nicht zueinander beweglichen Reihen von Sitzen dabei auf einer gemeinsamen Tragleiste angeordnet sind oder auf zwei getrennte, relativ zueinander in Querrichtung jedoch nicht bewegbare, Tragleisten verteilt sind, ist dabei unerheblich.

Insbesondere sind die beiden einreihigen Tragleisten in Querrichtung zueinander benachbart, was bedeutet, dass sich keine weitere Tragleiste oder Reihe von Sitzen zwischen ihnen befindet.

Der Spreiztisch-Antrieb ist so ausgebildet, dass er in der Lage ist, die beiden einreihigen Tragleisten wahlweise in Querrichtung gegeneinander oder auseinander zu bewegen, insbesondere zwischen einem Zufuhr-Abstand und einem Abfuhr-Abstand zu bewegen.

Unabhängig davon, welche Art von Gruppe auf dem Spreiztisch gebildet werden soll, ist dabei der Zufuhr-Abstand in aller Regel immer der gleiche, da er ja vom Reihen-Abstand des meist immer gleichen, verwendeten Zufuhr-Roboters abhängt.

Vom Abfuhr-Abstand kann es aber mehrere Versionen geben abhängig von der Gestalt der herzustellenden Gruppe und insbesondere dem darin gewünschten Reihen-Abstand zwischen den einzelnen Reihen, insbesondere innerhalb eines Abfuhr-Sets:
Wenn beispielsweise 2-reihige Abfuhr-Sets hergestellt werden sollen, entspricht der Abfuhr-Abstand innerhalb des Abfuhr-Sets in der Regel dem Reihen-Abstand der Reihen innerhalb der doppelreihigen Tragleisten, und dann wird auch der Abstand zwischen den einreihigen Leisten auf den gleichen Reihen-Abstand der Sitze eingestellt, was in der Regel ohnehin der Ausgangszustand ist und damit der Zufuhr-Abstand zwischen den beiden einreihigen Tragleisten, der dann gleichzeitig der Abfuhr-Abstand ist.

Wenn beispielsweise 3-reihige Abfuhr-Sets hergestellt werden sollen, bei denen dann in aller Regel der Reihen-Abstand innerhalb dieses Abfuhr-Sets der gleiche sein soll wie bei den 2-reihigen Abfuhr-Sets und wie der Reihenabstand auf den doppelreihigen Tragleisten, dann wird der Abfuhr-Abstand zwischen den beiden Reihen der einreihigen Tragleisten so gewählt, dass jede davon an die jeweils benachbarte zweireihige Tragleisten soweit angenähert wird, insbesondere bis auf Kontakt, dass der Reihen-Abstand zwischen der einen Reihe auf der einreihigen Tragleiste und der nächsten Reihe auf der doppelreihigen Tragleisten der gleiche ist wie zwischen den beiden Reihen der doppelreihigen Tragleiste. Wenn beispielsweise 4-reihige Abfuhr-Sets hergestellt werden sollen, werden beide einreihigen Tragleisten gegenüber einer der benachbarten doppelreihigen Tragleiste in Querrichtung so positioniert, dass zwischen allen 4 Reihen des Abfuhr-Sets der gleiche Reihen-Abstand vorliegt, nämlich der gleiche, wie er auch zwischen den beiden Reihen der beteiligten doppelreihigen Tragleiste vorliegt.

Wenn auf der gegenüberliegenden Seite der einreihigen Tragleisten dann zweiweitere doppelreihige Tragleisten vorhanden sind, werden auch diese soweit gegeneinander angenähert, dass zwischen den beiden mittleren Sitz-Reihen der gleiche Querabstand vorliegt wie zwischen den beiden Reihen jeder der beiden Doppelreihigen Tragleisten, der bei beiden der gleiche ist.

Auf diese Art und Weise können Abfuhr-Sets sowohl mit ungerader als auch gerader Anzahl von Reihen gebildet werden, wobei an die maximal erreichbare Anzahl von Reihen natürlich die Anzahl und wechselseitige Anordnung in Querrichtung von einreihigen und doppelreihigen Tragleisten angepasst werden muss.

### Aufbau Spreiztisch allgemein:

Vorzugsweise sind wenigstens zwei der Tragleisten eines Spreiztisches in Querrichtung fest (= querfest) mit dem Grundkörper verbunden, jedoch keine direkt zueinander benachbarten Tragleisten. Die restlichen Tragleisten sind
- entweder jeweils, insbesondere alle, direkt relativ zum Grundkörper quer verlagerbar, insbesondere unabhängig voneinander, und werden dann nachfolgend Direktleisten genannt
- oder von den nicht querfesten Tragleisten ist wenigstens eine als Direktleiste direkt relativ zum Grundkörper quer verlagerbar und
- die übrigen Tragleisten als nicht querfeste nur indirekt relativ zum Grundkörper verlagerbar sind, indem sie direkt relativ zur Direktleiste quer verlagert sind, und werden nachfolgend Indirektleisten genannt.

Vorzugsweise sind dabei die Indirektleisten die äußersten Tragleisten des Spreiztisches.

Insbesondere wenn von der wenigstens einen Direktleiste auf mindestens einer Seite, insbesondere beiden Seiten, in Querrichtung mindestens ein, besser zwei in Längsrichtung beabstandete und parallel zueinander verlaufende Führungsstäbe abstreben, entlang der oder denen die wenigstens eine Indirektleiste entlang formschlüssig geführt ist, ergibt dies einen einfach realisierbaren Aufbau der mit wenigen Antrieben zur Querverstellung der Tragleisten auskommt.

### 1. konkrete Lösung:

Eine Lösung kann darin bestehen, dass
- eine doppelreihige Tragleiste in Querrichtung unmittelbar benachbart, also ohne weitere Tragleisten dazwischen, neben einer von zwei einreihigen Tragleisten angeordnet ist,
- die doppelreihige Tragleiste und die davon abgewandte der beiden einreihigen Tragleisten querfest am Grundkörper befestigt sind und
- außen angrenzend an die beiden querfesten Tragleisten jeweils eine doppelreihige Tragleiste angeordnet ist.

Dann können mit nur 3 Quer-Antrieben 2-reihige, 3-reihige und 4-reihige Gruppen, insbesondere Abfuhr-Sets, von Produkten erzeugt werden.

Meist werden im Ausgangszustand die beiden einreihigen Tragleisten zueinander sehr gering beabstandet sein, insbesondere einander kontaktieren, jedoch zu den benachbarten doppelreihigen Tragleisten sowie diese untereinander einen Ausgangs-Abstand einnehmen, der vorzugsweise der Zufuhr-Abstand ist. Dann ist für die Herstellung von 2-reihigen Abfuhr-Sets dieser Ausgangs-Abstand auch der Abfuhr-Abstand.

Vorzugsweise ist die nicht querfeste einreihige Tragleiste eine Direktleiste, während die beiden äußeren doppelreihigen Tragleisten Indirektleisten sind.

Die nicht querfeste, einreihige Tragleiste kann mittels eines gesteuerten 1. Quer-Antriebes in Querrichtung bewegbar sein, der insbesondere auf die Stirnseite des Führungsstabes einwirken kann und diesen in Querrichtung verschieben kann.

Vorzugsweise sind
- entweder die beiden äußeren doppelreihigen Tragleisten mittels eines jeweils separaten 2. und 3. Quer-Antriebes in Querrichtung bewegbar
- oder die beiden äußeren doppelreihigen Tragleisten sind mittels eines gemeinsamen 2. Quer-Antriebes und einer Gegensynchron-Mechanik in Querrichtung gegensynchron bewegbar.

### 2. konkrete Lösung:

Eine andere konkrete Lösung kann darin bestehen, dass
- eine doppelreihige Tragleiste unmittelbar neben einer von zwei einreihigen Tragleisten jeweils unabhängig voneinander quer verlagerbar zum Grundkörper angeordnet sind,
- außen angrenzend an dieses Paket mit 4 Sitzreihen jeweils eine doppelreihige Tragleiste querfest zum Grundkörper angeordnet ist.

### Auch dies kann eine Ausbildung mit sehr wenigen Antrieben ermöglichen.

Insbesondere ist dies dann der Fall, wenn im Ausgangszustand die beiden einreihigen Tragleisten zueinander sehr eng beanstandet sind oder einander kontaktieren, jedoch zu den benachbarten doppelreihigen Tragleisten sowie diese untereinander einen Ausgangs-Abstand einnehmen.

Dieses Ziel wird weiter dadurch gefördert, dass
- die beiden einreihigen Tragleisten mittels eines gesteuerten 1. Quer-Antriebes und einer Gegensynchron-Mechanik in Querrichtung gegensynchron bewegbar sind und
- die doppelreihige Tragleiste einerseits und die beiden einreihigen Tragleisten gemeinsam andererseits mittels eines gesteuerten 2. Quer-Antriebes und einer Gegensynchron-Mechanik gegensynchron in Querrichtung verlagerbar sind.

### Produkt-Wender:

Wenn die Produkte innerhalb der Gruppe in Längsrichtung und/oder in Querrichtung jeweils abwechselnd unterschiedlich orientiert sein sollen, insbesondere abwechselnd auf dem Fuß stehend und auf dem Kopf stehend, sollte jeder Zufuhr-Bereich einen Produkt-Wender mit Greifern, insbesondere Saugern, aufweisen, die mit Produkten daran um eine horizontale Schwenkachse, insbesondere gemeinsam mit dem Basiskörper des Produkt-Wenders, verschwenkt werden können.

Auf diese Art und Weise können Produkte von einer 1. Orientierung in eine 2. Orientierung verschwenkt werden.

Die Anzahl von Greifern sollte insbesondere der Anzahl eines halben Zufuhr-Sets an Produkten für die Zufuhr zum Spreiztisch entsprechen.

Insbesondere sollte der Produkt-Wender so ausgebildet sein, dass er in der Lage ist, seine Greifer, insbesondere Sauger zwischen einer ersten Funktionsstellung mit allen Greifern in nur einer Reihe und einer zweiten Funktionsstellung, in der jeder 2. Greifer quer zu dieser ursprünglichen Reihe in eine zweite, parallele Reihe versetzt ist, sodass die Greifer nun auf einer Zickzacklinie liegen, zu verlagern.

Wenn der Zufuhr-Roboter ein Werkzeug mit zwei Reihen von Greifern, insbesondere Saugern, zum Halten je eines Produktes aufweist, die einerseits die auf der Zickzacklinie liegenden, gewendeten Produkte aufnehmen kann und zusätzlich die gleiche Anzahl von nicht gewendeten Produkten, die auf einer komplementären Zickzacklinie liegen, aufnehmen kann, hält dieses Werkzeug zwei Reihen von sowohl in Reihen-Richtung als auch in Spalten-Richtung jeweils abwechselnd unterschiedlich orientierten Produkten.

Dies kann besonders einfach erreicht werden, indem im Werkzeug des Zufuhr-Roboters je ein Paar von zwei, in Querrichtung zu der Reihen-Richtung, benachbarte Greifer an je einem Paar-Halter, befestigt sind und diese in Längsrichtung hintereinander angeordneten Paar-Halter, in Querrichtung verfahrbar sind zwischen der ersten Funktionsstellung, in der die Greifer in 2 in Längsrichtung verlaufenden Reihen angeordnet sind, und der zweiten Funktionsstellung, in der die Greifer in 3 in Längsrichtung verlaufenden Reihen angeordnet sind.

### Mehrere Spreiz Tische:

Um den Durchsatz zu erhöhen, können innerhalb der Maschine mehrere bewegliche, insbesondere unabhängig voneinander bewegliche, Spreiztische vorhanden sein, während der wenigstens eine Quer-Antrieb in einer, insbesondere nur einer, Spreiz-Station angeordnet ist, zu der alle beladenen Spreiztische verfahrbar sind.

Damit muss die gesamte für die Spreizung notwendige Mechanik samt Antrieben in der Maschine nur einmal vorgehalten werden, selbst wenn eine Vielzahl von Spreiztischen im Einsatz sind, da das Verändern der Querabstände in der Spreiz Station, die vorzugsweise gleichzeitig der Abfuhr-Bereich für die Abfuhr-Sets der fertig zusammengestellten Gruppen ist, und dass Umsetzen vom Spreiz Tisch in die Umverpackung oder auf einen Abförderer wesentlich schneller geht als das korrekte Zusammenstellen der Beladung für einen Spreiztisch und dessen Belade-Vorgang.

Deshalb sind in der Verpackungsmaschine vorzugsweise mehrere Anlieferungs-Bereiche und Zufuhr-Bereiche vorhanden, in denen je ein Spreiztisch vollständig oder auch nur, insbesondere nacheinander, teilweise beladen werden kann.

Vorzugsweise ist dabei jeder Spreiztisch mittels einer Transportvorrichtung verfahrbar, insbesondere auf einem Schlitten angeordnet, der insbesondere entlang einer Führung verfahrbar ist, insbesondere zur Spreiz-Station und/oder dem Abfuhr-Bereich mit dem dortigen Abfuhr-Roboter.

Das Werkzeug des Abfuhr-Roboters weist vorzugsweise mehrere in einem fixen Querabstand angeordnete, Reihen von Greifern, insbesondere Saugern, auf, und die in Querrichtung benachbarten, etwa auf gleicher Längsposition entlang der Reihen angeordneten, Greifer als Quergruppe an einem Quergruppen-Halter, befestigt sind und diese Quergruppen-Halter in Längsrichtung verfahrbar sind zwischen einer ersten, weiter beabstandeten und der zweiten, näher beabstandeten oder kontaktierenden Funktionsstellung.

Insbesondere weist das Werkzeug des Abfuhr-Roboters zwei Reihen auf, wenn sie zweireihige Abfuhr-Sets ergreifen und umsetzen sollen und dementsprechend sind die Quergruppen-Halter dann Paar-Halter, da sie genau zwei Greifer halten.

Auf diese Art und Weise können die Produkte vor dem Umsetzen in die Umverpackung nochmals zusätzlich in Längsrichtung auf einen gewünschten LängsAbstand gebracht werden, vorzugsweise maximal nah und überlappend in Längsrichtung aneinander angenähert werden um eine hohe Packungsdichte in der Umverpackung zu erreichen.

Je nach Arbeitsauftrag kann es vorkommen, dass beim Leeren des Spreiztisches eine Rest-Gruppe auf dem Spreiztisches übrig bleibt, die nicht mehr einem Karton-Array entspricht. Dies ist vor allem dann der Fall, wenn die Kartons in mehreren Lagen gefüllt werden, aber nicht alle Lagen die gleiche Anzahl an Produkten aufweisen sollen.

Um den Spreiztisches vollständig zu leeren, wird diese Rest-Gruppe - egal ob es sich um Teile einer in Längsrichtung verlaufenden Reihe, eine ganze Reihe oder ein Teil oder eine ganze Spalte der Gruppe auf dem Spreiz Tisch ist - zwischengelagert und später weiter verwendet.

Zu diesem Zweck ist ein Puffer für solche Produkte vorhanden, insbesondere mit in Längsrichtung verlaufenden Reihen von Sitzen (S), die sich insbesondere in Querrichtung in einem Überlappungs-Abstand befinden, und vorzugsweise auf einem Puffer-Schlitten ausgebildet sind, der in Durchlaufrichtung, insbesondere entlang einer Pufferschiene, hin und her verfahrbar ist.

Vorzugsweise ist ein Puffer-Roboter vorhanden, der in der Lage ist, die Rest-Gruppe in den Puffer umzusetzen und dabei weitere Manipulationen an der Rest-gruppe und/oder deren einzelnen Produkten vorzunehmen, beispielsweise ein verschränken um eine aufrechte Achse, Ändern des Abstandes in längs-und/oder Querrichtung oder andere Manipulationen.

Der Puffer-Schlitten kann in Durchlaufrichtung (die Längsposition der Spreiz-Station anfahren in einem solchen Querabstand zum Abfuhr-Roboter, dass dieser mit seinem Werkzeug Produkte vom Puffer-Schlitten entnehmen kann, insbesondere in ganzen Karton-Arrays und, insbesondere direkt, in Kartons umsetzen kann.

Hinsichtlich des Verfahrens zum Erzeugen mindestens einer mehrreihigen, einlagigen Gruppe von Produkten (P) aus insbesondere in einer oder mehreren Reihen angelieferten Produkten und Einsetzen der Gruppe oder von Teilen der Gruppe als Karton-Arrays in eine Umverpackung, etwa einen Karton (K)
- wobei die Reihen-Anzahl wahlweise eine gerade oder eine ungerade Anzahl sein kann, insbesondere die Reihen-Anzahl 2, 3 oder 4 sein kann,
- wobei die Produkte innerhalb der Gruppe in der Aufsicht betrachtet spätestens beim Einsetzen in die Umverpackung in Reihen-Richtung, der Längsrichtung, und/oder in Querrichtung hierzu einander teilweise überlappen,

insbesondere mittels einer Verpackungsmaschine gemäß einem der vorhergehenden Ansprüche,
ist es bekannt, dass
   - mindestens ein Spreiztisch vorhanden ist, auf dem jeweils mehrere Tragleisten mit zwei Reihen oder nur einer Reihe von Sitzen für je ein Produkt pro Sitz in ihrem Querabstand verstellbar zueinander angeordnet sind,
   - wobei zwei einreihige Tragleisten in Querrichtung benachbart zueinander angeordnet sind zwischen zwei zweireihigen Tragleisten.

Erfindungsgemäß werden dann die beiden einreihigen Tragleisten zwischen
- einer eng benachbarten, insbesondere kontaktierenden, Lage nebeneinander
- und einer weiter beabstandeten Lage auseinander und eng benachbart, insbesondere kontaktierend, zu der benachbarten doppelreihigen Tragleiste
hin und her verstellt, wodurch im 1. Fall eine Gruppe mit gerader Reihen-Anzahl und im 2. Fall eine Gruppe mit einer ungeraden Reihen-Anzahl erstellt werden kann.

Vorzugsweise werden dabei die Produkte innerhalb der Gruppe in Längsrichtung, und/oder in Querrichtung jeweils abwechselnd unterschiedlich orientiert angeordnet.

Zur Bildung von 4-reihigen Gruppen werden vorzugsweise beide einreihigen Tragleisten eng benachbart, insbesondere in Anlage an, die eine direkt benachbarte doppelreihige Tragleiste gebracht und auf der anderen Seite der beiden einreihigen Tragleisten zwei doppelreihige Tragleisten in eine eng benachbarte Lage zueinander gebracht, jedoch mit Abstand zu den beiden einreihigen Tragleisten.

Vorzugsweise werden dabei die Tragleisten so angeordnet, dass bei Paketen mit eng benachbarten 2, 3 oder 4 Reihen von Sitzen der Abstand zwischen den Paketen von Sitzen und den Tragleisten, die sie tragen, immer der gleiche ist. Dadurch kann immer das gleiche Abfuhr-Werkzeug benutzt werden.

Meist werden die Produkte dem Spreiztisch bereits in 2-reihigen Zufuhr-Sets zugeführt, wobei innerhalb des Zufuhr-Sets sowohl entlang der Reihen als auch quer dazu die Produkte abwechselnd in einer von zwei unterschiedlichen Orientierungen, insbesondere auf dem Fuß stehen und auf dem Kopf stehend, vorliegen.

Insbesondere hierfür wird das Zufuhr-Set erzeugt, indem
- eine 1. Reihe von Produkten entsprechend der Anzahl eines halben Zufuhr-Sets mit in einer 1. Orientierung vorliegenden Produkten ergriffen wird,
- das 2. und jedes andere geradzahlige Produkt der Reihe in Querrichtung versetzt wird in eine parallele Reihe, sodass die Produkte in einem Zickzack-Muster angeordnet sind, insbesondere auf einer Zickzack-Linie, liegen,
- alle diese Produkte, insbesondere gemeinsam, gewendet werden in eine 2. Orientierung
- eine andere Reihe von Produkten entsprechend der Anzahl eines halben Zufuhr-Sets mit in einer 1. Orientierung vorliegenden Produkten ergriffen wird,
- von dieser anderen, gewendeten Reihe das 1. und jedes andere ungeradzahlige Produkt in Querrichtung versetzt wird in eine parallele Reihe, sodass die Produkte in einem komplementären Zickzack-Muster angeordnet sind, insbesondere auf einer komplementären Zickzack-Linie liegen,
- die gewendeten zwischen die ungewendeten Produkten als Zufuhr-Set festgehalten werden.

Ob von der gewendeten Reihe alle ungeradzahligen Produkte in Querrichtung in eine parallele Reihe versetzt werden und von der anderen Reihe die geradzeiligen Produkte oder umgekehrt ist nicht relevant, sofern ein doppelreihiges Zufuhr-Set gebildet wird, bei dem sich die Produkte hinsichtlich ihrer Orientierung in Längsrichtung als auch in Querrichtung jeweils abwechseln.

Falls nach dem Umsetzen der Karton-Arrays in die Kartons auf dem Spreiztisch eine Rest-Gruppe von Produktenverbleibt, kann diese in einen Puffer umgesetzt werden, insbesondere unter Drehung der Rest-Gruppe um eine aufrechte Achse.

Nach Erreichen eines Füllstandes des Puffers - der nur eine Lage enthält - der mindestens ein Karton-Array umfasst, vorzugsweise so viele Karton-Arrays, wie aus einer Abfuhr-Gruppe erzielt werden können, werden mindestens ein, vorzugsweise alle erzielbaren, Karton-Arrays aus dem Puffer entnommen und, insbesondere direkt, in Kartons umgesetzt und die übrig gebliebenen Rest-Gruppen von Produkten auf diese Art und Weise weiterverwendet.

### c) Ausführungsbeispiele

Ausführungsformen gemäß der Erfindung sind im Folgenden beispielhaft näher beschrieben. Es zeigen:
- **Figur 1:**: die Verpackungsmaschine mit schematischem Produktfluss in der Aufsicht,
- **Figur 1a:**: in einer Ausschnittvergrößerung auf den linken Teil der **Figur 1** den Produktfluss ohne Maschinengestell,
- **Figur 1b:**: in einer Ausschnittvergrößerung auf den rechten Teil der Figur 1 den Produktfluss ohne Maschinengestell,
- **Figur 2a, b**:: die Erstellung der Zufuhr-Sets betrachtet in Durchlaufrichtung 10*,
- **Figur 2c-e:**: die Erstellung der Zufuhr-Sets betrachtet in der Aufsicht,
- **Figur 3:**: einen Spreiztisch mit in Längsrichtung verlaufenden Reihen von Sitzen,
- **Figur 4a:**: den Spreiztisch der **Figur 3** betrachtet in Längsrichtung mit viermal je zwei Reihen von Sitzen in Überlappungsposition, und Abstand zwischen den in Überlappungsposition zueinander befindlichen Doppelreihen,
- **Figur 4b:**: den Spreiztisch der **Figur 3** betrachtet in Längsrichtung mit zweimal je vier Reihen in Überlappungsposition, und Abstand zwischen den in Überlappungsposition zueinander befindlichen Vierer-Reihen,
- **Figur 4c:**: den Spreiztisch der **Figur 3** betrachtet in Längsrichtung mit zweimal je drei Reihen in Überlappungsposition, und Abstand zwischen den in Überlappungsposition zueinander befindlichen Dreier-Reihen,
- **Figur 5:**: die Spreiz-Station in perspektivischer Darstellung.

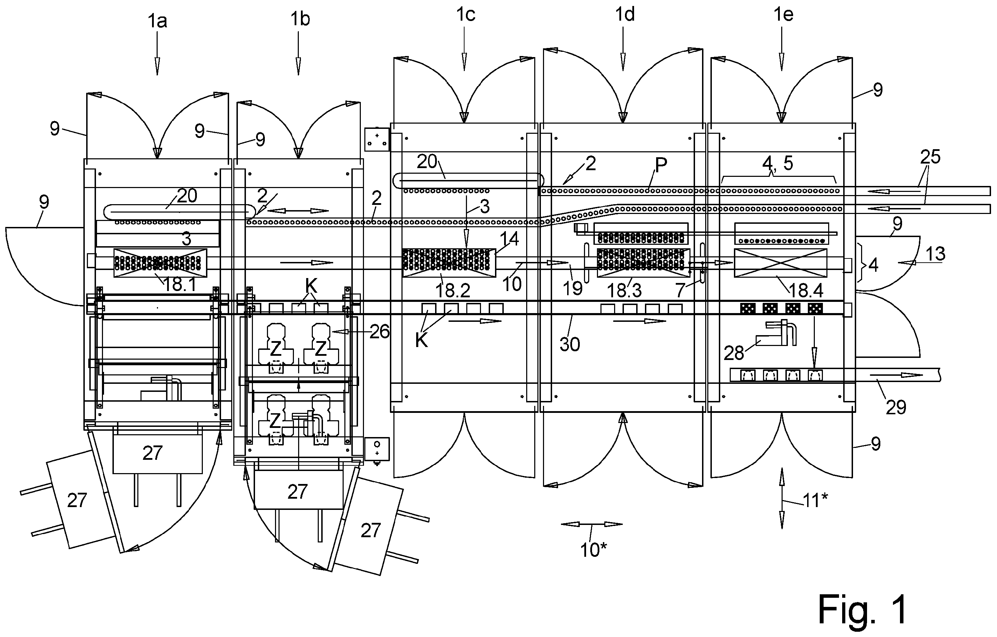

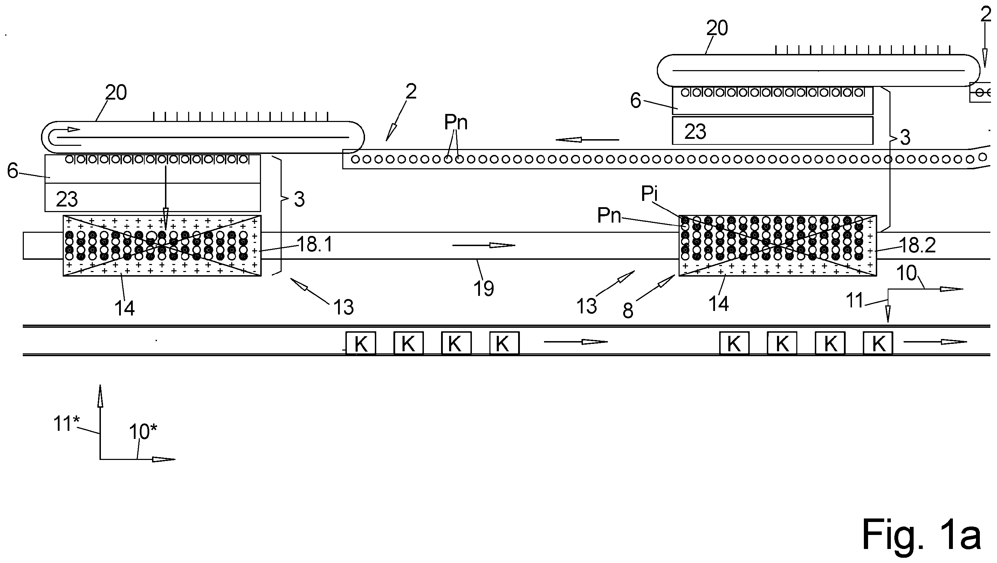

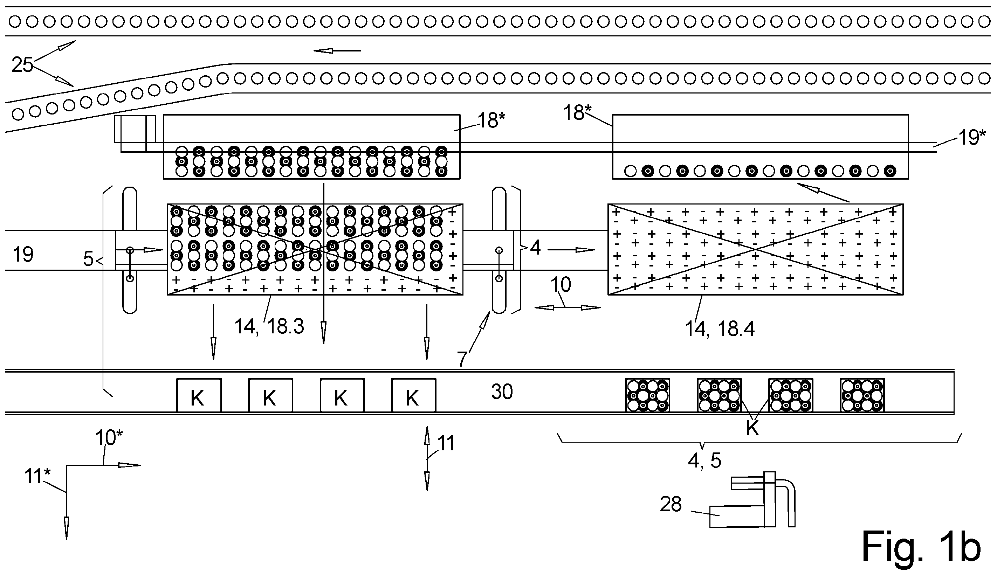

**Figur 1** und in vergrößerten Abschnitts-Darstellungen die **Figuren 1a****, b** zeigen die Verpackungsmaschine in der Aufsicht, wobei in **Figur 1** rechts oben in zwei getrennten Spuren mittels je eines Produkt-Zuförderers 25 Produkte P zugeführt und rechts unten damit gefüllte und geschlossene Kartons K aus der Maschine mittels eines Karton-Abförderers 29 abgeführt werden.

Prinzipiell werden die Produkte P mit jedem der beiden Produkt-Zuförderer 25 jeweils in der Haupt-Transportrichtung 10* von rechts nach links einem von je zwei Anliefer-Bereichen 2 zugeführt, von dort in je einem Zufuhr-Bereich 3 in einer bestimmten Anordnung - den sogenannten Zufuhr-Sets - auf je einen Schlitten 18.1, 18.2, 18.3 einer Transportvorrichtung 8 umgesetzt, von denen jeder einen Spreiztisch 14 als Teil einer Gruppier-Vorrichtung 13 trägt und in der **Figur 1** in der Haupt-Transportrichtung 10* von links nach rechts weiterbewegt und im rechten Endbereich der Maschine in offene Kartons K umgesetzt.

Die Verpackungsmaschine umfasst in der Haupt-Transportrichtung 10* mehreren, in diesem Fall fünf, Gestell-Modulen 1a - 1e hintereinander, die in der Aufsicht jeweils rechteckig sind und deren jeweilige Längsseiten durch eine zweiflügelige Sicherheitstür 9 verschlossen ist, und wobei auch die beiden Stirnseiten der Maschine durch eine Sicherheitstür 9 verschlossen ist, die die Maschine sofort stillsetzen, wenn eine der Sicherheitstüren 9 geöffnet wird.

Die beiden Anlieferbereiche 2 und Zufuhrbereiche 3 befinden sich in den Gestell-Modulen 1a und 1c.

Die Kartons K werden wie üblich aus ebenen Zuschnitten Z, die aus einem seitlich am jeweiligen Gestell-Modul 1a, b angeordnete und zur Befüllung ausklappbaren Zuschnitt-Magazin 27 einzeln entnommen und einem Aufrichter 26 zugeführt, der die flachen Zuschnitte Z zu dreidimensionalen, oben offenen Kartons K aufrichtet, die dann auf einem Behälterband 30 weitertransportiert werden bis zum Abfuhr-Bereich 5 - hier im Gestell-Modul 1d - wo die auf einem Spreiztisch 14 angeordneten Produkte P von diesem abgeführt und in die leeren Kartons K umgesetzt werden.

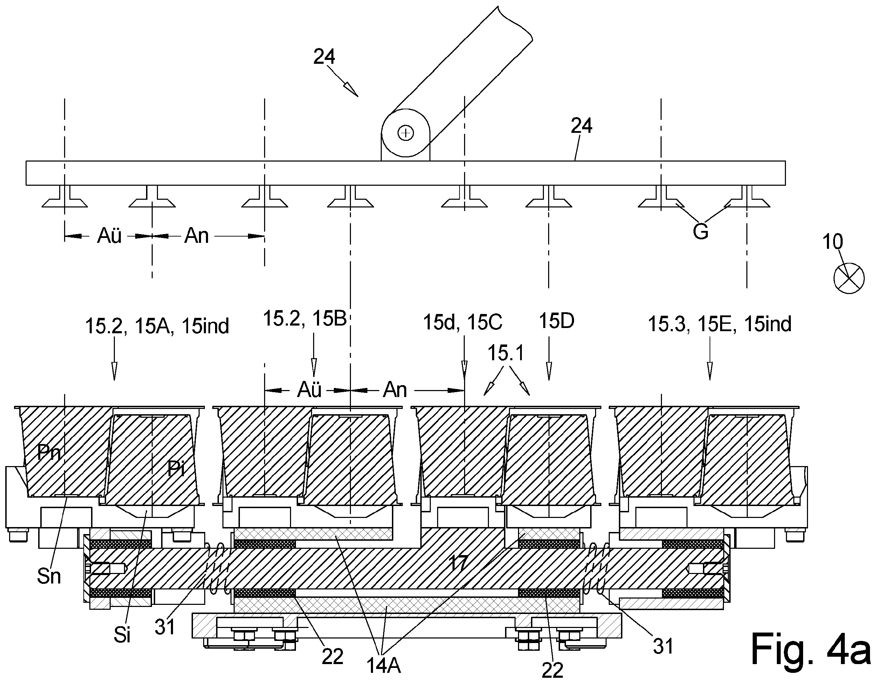

Dabei umfasst dieser Abfuhr-Bereich 5 auch einen Spreiz-Bereich 4 mit einer Spreizstation 7, um die dort auf dem Spreiztisch 14 befindlichen, in Längsrichtung 10 verlaufenden Reihen R von Produkten auf den richtigen Querabstand zueinander zu bringen, damit der - nur in **Figur 4a** dargestellte - Abfuhr-Roboter 24 die Produkte in die Kartons K umsetzen kann.

Die gefüllten Kartons K werden anschließend quer zur Haupt-Transportrichtung 10* versetzt und dabei mittels einer Verschließ-Station 28 verschlossen mittels ihres Deckels, aufgelegt auf einen Karton-Abförderer 29 und damit in Haupt-Förderrichtung 10* aus der Verpackungsmaschine ausgeschleust.

Im vorliegenden Fall stimmen die Längsrichtung 10 der Spreiztische 14, die insbesondere die Längsrichtung 10 der Reihen R von Sitzen S darauf ist, mit der Haupt-Transportrichtung 10* der Verpackungsmaschine überein und ebenso die im 90°-Winkel dazu verlaufende horizontale Querrichtung 11 der Spreiztische 14 mit der horizontalen Querrichtung 11*, die im 90° Winkel zur Haupt-Durchlaufrichtung 10*der Maschine verläuft.

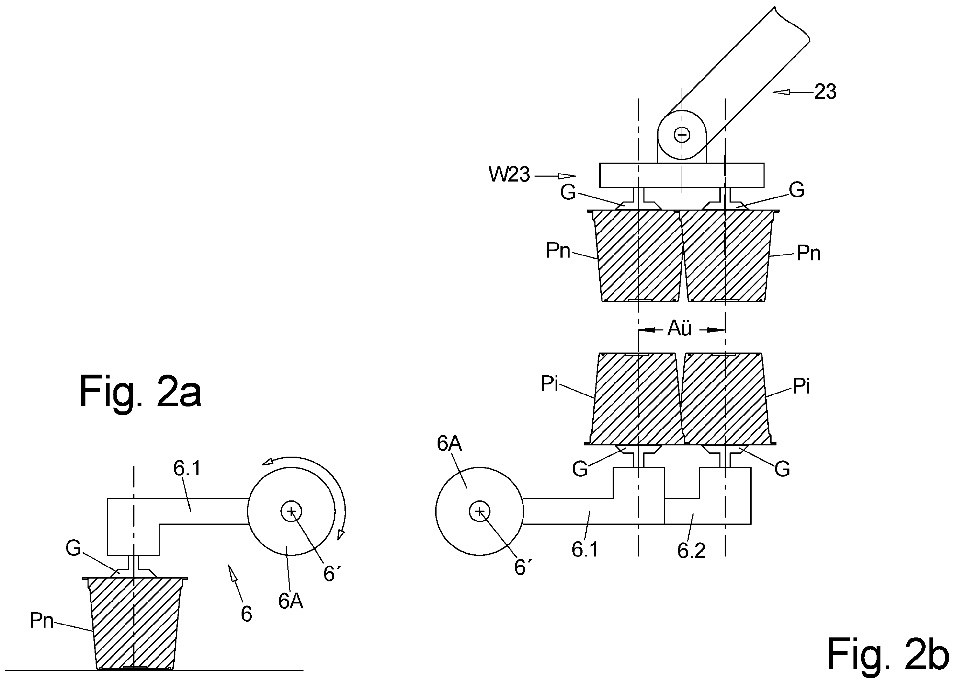

Wie **Figur 2a** sowie die **Figuren 4a** - **c** zeigen, handelt es sich um Produkte P, die zum Erzielen einer möglichst großen Packungsdichte in der horizontalen Ebene in Längsrichtung 10 als auch in Querrichtung 11 überlappend angeordnet und in Kartons eingebracht werden können, da sie über ihre Höhe keinen gleich bleibenden Querschnitt aufweisen, insbesondere nicht zylindrisch sind, sondern in diesem Fall kegelstumpf-förmig mit einem horizontal überstehenden Rand an der Breitseite des Kegelstumpfs, etwa Kaffeekapseln.

Diese sollen nach Möglichkeit von ein und derselben Maschine in hinsichtlich Längsrichtung und Querrichtung eine unterschiedliche Anzahl aufweisenden Karton-Arrays von Produkten P in je einen Karton K eingebracht werden können.

Will man - wie in **Figur 1**, **1a**, **1b** dargestellt - z.B. drei in Längsrichtung 10 verlaufende Reihen mit je vier solchen Produkten P möglichst dicht gepackt einbringen, so müssen die Produkte abwechselnd in normaler Orientierung Pn und inverser Orientierung Pi von einem zum nächsten Produkt P, vorzugsweise bei einem in Längsrichtung 10 und Querrichtung 11 orientierten Array in dessen beiden Richtungen, angeordnet werden.

Hierfür sind diese Produkte P mit ihren konischen Umfangsflächen im mittleren Höhenbereich so eng zueinander angeordnet bzw. kontaktierend zueinander angeordnet, dass die mit dem verbreiteten Rand unten befindliche, also auf dem Kopf stehende, Kapsel - im Folgenden in dieser Lage invers orientiertes Produkt Pi genannt, im Gegensatz zu einem in Normallage befindliches Produkt Pn mit dem überstehenden Rand oben - nicht nach oben herausgezogen werden könnte.

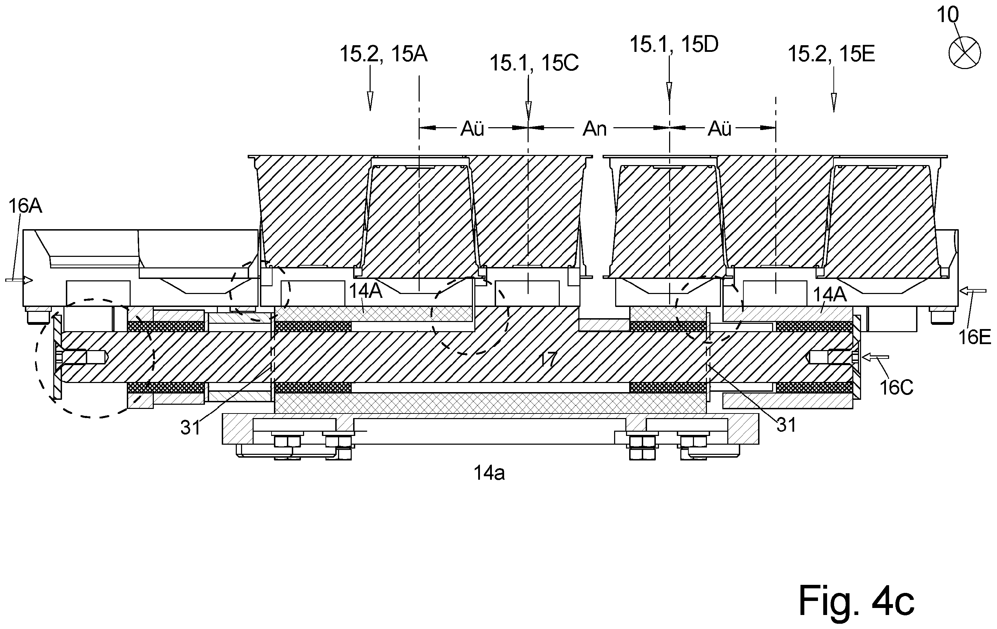

Im Karton K und somit auch kurz vor dem Ablegen darin ist vorzugsweise die gleiche Überlappung, wie in **Figur 4c** in Querrichtung 11 zu erkennen, auch in Längsrichtung 10 gegeben, wobei die Veränderung der Abstände der Produkte P in Längsrichtung 10 durch den dort umsetzenden Abfuhr-Roboter 24 und dessen Werkzeug W24 erfolgt.

Da die Produkte P in aller Regel immer in der gleichen Orientierung, hier in normaler Orientierung Pn, zugeführt werden, sind Maßnahmen nötig, um in Längs- und Querrichtung des zweidimensionalen Abfuhr-Sets - welches vom Spreiztisch entnommen wird und welches mehrere in einem Karton abzulegende Arrays umfassen kann - sowohl in Längsrichtung als auch in Querrichtung diese abwechselnde unterschiedliche Orientierung zu erzielen.

Dies soll abhängig von der gewünschten Verpackung in diesem Fall mit zweireihigen, dreireihigen oder vierreihigen Abfuhr-Sets und damit Karton-Arrays möglich sein.

Weiterhin kommt erschwerend hinzu, dass die in mehreren Lagen übereinander in den Kartons abgelegten Karton-Arrays in den unteren Schichten in der Regel vollständige Lagen aufweisen, in der z.B. obersten Schicht jedoch eine unvollständige Lage aufweisen können sollen.

Zunächst müssen Reihen von Produkten P erstellt werden, mit einer Anzahl von Produkten pro Reihe, die der Anzahl innerhalb der Reihen, die auf dem Spreiztisch benötigt werden, entspricht. Die Anzahl der Produkte in einer Reihe ist hier 16, also um 1 geringer als die Anzahl von Sitzen S innerhalb einer Reihe R von Sitzen S des Spreiztisches 14.

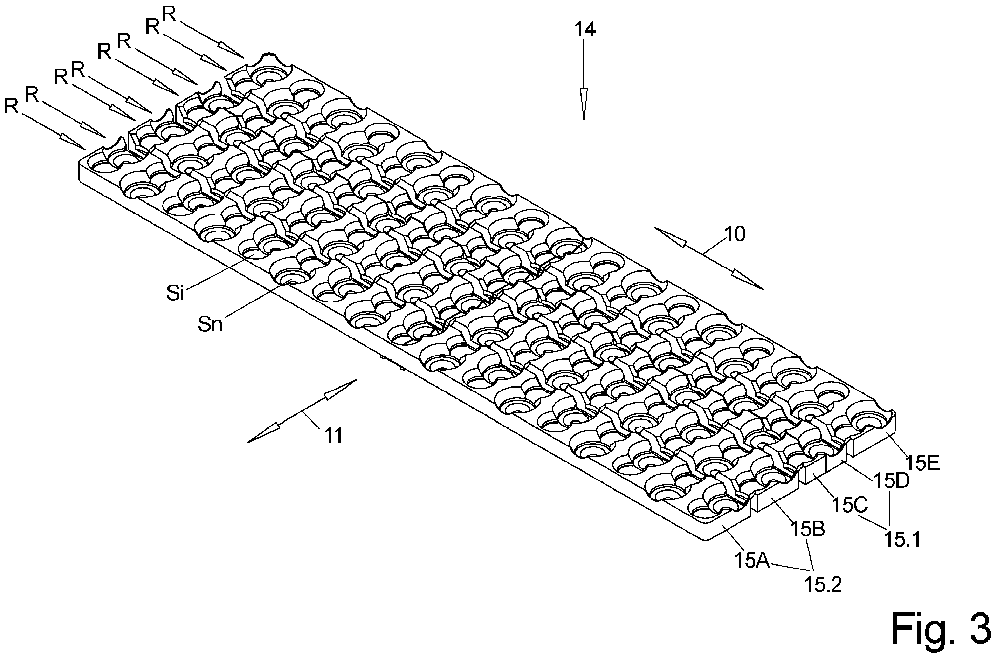

Wie in **Figur 3** ersichtlich, sind die Sitze S als Vertiefungen ausgebildet, die unterschiedlich gestaltet sind je nachdem ob ein invers orientiertes Produkt Pi oder ein normal orientiertes Produkt Pn darin aufgenommen werden soll.

Hierfür wird von jeder der beiden ankommenden endlosen einreihigen Schlangen von Produkten Pn in jedem der beiden Anliefer-Bereiche 2 je eine Reihe mit einer bestimmten Anzahl, hier 16 Stück, von Produkten P abgenommen und in einem definierten Längsabstand zueinander vorgehalten durch eine bekannte, in der Aufsicht betrachtet über beidseitig je eine Umlenkwalze umlaufende Gruppier-Kette, von der in einem definierten Abstand die entsprechende Anzahl von Mitnehmern 21 radial absteht, hier 16 Mitnehmer.

Der in **Figur 1a** vom zeichnerisch oberen Trum über die rechte Umlenkwalze ins zeichnerisch untere Trum sich bewegende erste Mitnehmer nimmt das erste Produkt P der angelieferten Schlange von Produkten formschlüssig mit, wobei die Schlange sofort nachrutscht und der zweite Mitnehmer das nun am vorderen Ende stehende Produkt mitnimmt usw. bis in Längsrichtung 10 insgesamt 16 normal orientierte Produkte Pn in einem definierten Längsabstand entlang des unteren dargestellten Trums und in einer definierten Position vorgehalten sind, und die Gruppier-Kette 20 anhält.

Die Mitnehmer 21 besitzen eine solche Höhe, dass die Produkte dennoch von oben ergriffen und nach oben zwischen den Mitnehmern 21 herausgenommen werden können.

Damit die auf dem Spreiztisch 14 zu bildende Gruppe sowohl in jeder in Längsrichtung 10 verlaufenden Reihe R als auch in jeder in Querrichtung 11 dazu verlaufenden Spalte hintereinander jeweils abwechselnd orientierte Produkte, also einmal Pn und das nächst Mal Pi, vorhanden sind, muss von den in beiden Produkt-Zuförderern 25 mit gleicher Orientierung, hier Pn, angelieferten Produkten zunächst die Hälfte gewendet werden in die inverse Orientierung Pi.

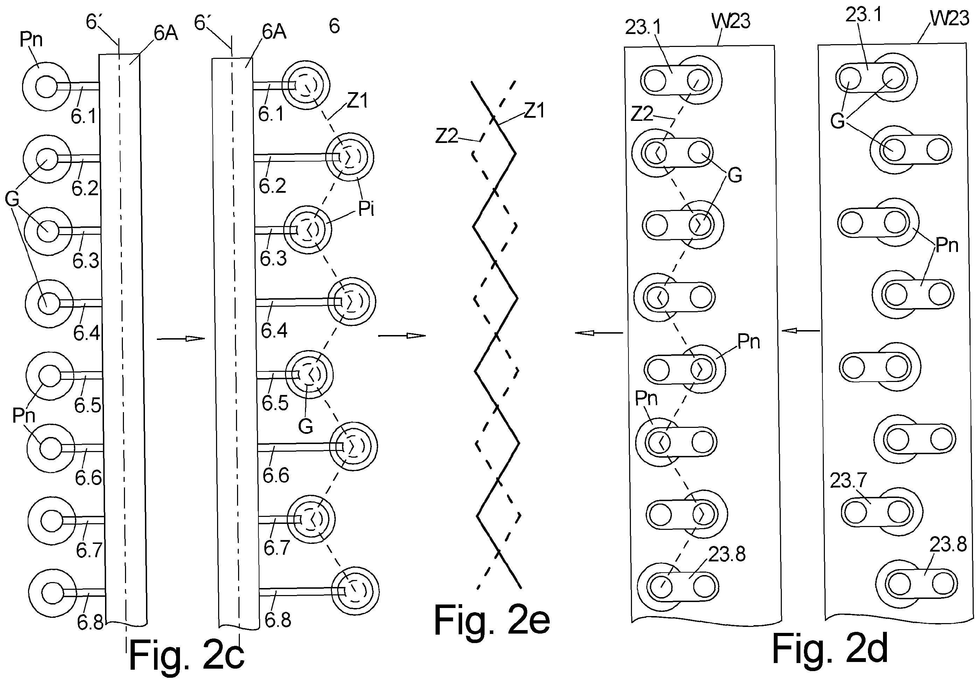

**Figur 2a** und **2c** zeigen einen Produkt-Wender 6 mit einem stangenförmigen Grundkörper 6A, entlang dem zur gleichen Seite hin abragend im Abstand der an der Gruppier-Kette 20 vorgehalten Produkte P eine analoge Anzahl, hier 16, Greifer-Halter 6.1 - 6.16 angeordnet sind, die in der Greifstellung an ihrem freien Ende jeweils einen nach unten weisenden Greifer G, hier einen Sauger G, tragen, die in der Greifstellung auf einer Geraden liegen.

Der Wender 6 ist so positioniert, und die Greifer-Halter 6.1 bis 6.16 in Längsrichtung 10 so zueinander beabstandet, dass er in dieser Greifstellung mit jeweils einem Greifer G auf einem Produkt P aufsitzt und dieses ergreifen und halten kann.

Zusätzlich ist der Grundkörper 6A um eine in seiner Längsrichtung 10 verlaufende Schwenkachse 6' um etwa 180° schwenkbar, sodass nach dem Verschwenken die Greifer G nach oben weisen und das davon gehaltene Produkt P sich oberhalb des Greifers G und in auf dem Kopf stehender, inverser Orientierung Pi befindet.

Zusätzlich ist zumindest jeder zweite Greifer-Halter, entweder die geradzahligen oder die ungeradzahligen, vorzugsweise jeder Greifer-Halter, in seiner Länge gesteuert automatisch veränderbar in die gleiche Querrichtung zur Schwenkachse 6' um eine Strecke, die dem Abstand zweier in Überlappungsposition bzw. Überlappungsabstand AÜ zueinander befindlichen Reihen R von Sitzen S auf dem Spreiztisch 14 entspricht.

Dadurch können gemäß **Figur 2c**, rechte Seite die gewendeten Produkte Pi auf den Ecken einer Zickzack-Linie Z1 angeordnet werden.

Die nächste von der Gruppier-Kette 20 vorgehaltene 16er- Reihe von Produkten Pn wird von dem Werkzeug W23 eines Zufuhr-Roboters 23 ergriffen, der - wie in **Figur 2b** rechts und in **Figur 2d** ganz rechts dargestellt - entsprechend dem Abstand der Produkte der 16er-Gruppe in der Gruppier-Kette 20 sechzehn Paar-Halter 23.1 bis 23.16 an seiner Unterseite trägt. Jeder der Paar-Halter trägt in Querrichtung 11 beabstandet mit dem Überlappungsabstand AÜ an seiner Unterseite zwei Greifer G.

Die geradzahligen oder die ungeradzahligen Paar-Halter 23.1 bis 23.16 sind in Querrichtung 11 um diesen Überlappungsabstand AÜ gegenüber den anderen, nicht verfahrbaren Greifer-Haltern aus der zueinander fluchtenden Lage heraus verstellbar, wobei auch alle Paar-Halter 23.1 bis 23.16 um diesen Überlappungsabstand AÜ in Querrichtung 11 verstellbar sein können.

Die Paar-Halter 23.1 bis 23.16 werden zunächst in die nicht-fluchtende, zueinander versetzte Position zueinander gebracht, wie in **Figur 2d****,** wodurch sich in der Mitte eine in Längsrichtung 10 verlaufende gerade mit 16 Greifern G fluchtend darauf ergibt und links und rechts davon im Überlappungsabstand AÜ jeweils eine Gerade mit je acht Greifern G darauf.

In diesem Zustand senkt sich der Zufuhr-Roboter 23 mit seiner mittleren Geraden mit 16 Saugern auf die 16er-Reihe von Produkten Pn in der Gruppier-Kette 20 ab, ergreift diese und hebt sie aus der Gruppier-Kette 20, und verlagert anschließend jeden zweiten Paar-Halter 23.1 bis 23.16 zurück in die zueinander fluchtende Lage, wodurch die vom Werkzeug W23 gehaltenen 16 Produkte, die sich in Normallage Pn befinden, nun in der Aufsicht betrachtet auf den Ecken einer Zickzack-Linie Z2 positioniert sind.

Der Wender 6 einerseits und der Zufuhr-Roboter 23 andererseits sind so gestaltet, dass die Z-Linien Z1 und Z2 gegenläufig sind, also sich bei Übereinanderliegen 15-mal kreuzen, oder anders ausgedrückt, das vom Wender 6 vorgehaltene Muster an Pi-Produkten komplementär zu dem vom Zufuhr-Roboter 23 vorgehaltenen Muster an Pn-Produkten ist.

Dementsprechend senkt sich nun gemäß **Figur 2e** der Zufuhr-Roboter 23 mit den daran gehaltenen Pn-Produkten auf das vom Wender 6 vorgehaltenen Muster an Pi-Produkten so ab, dass jeder der noch freien, pro Paar-Halter 23.1-23.16 jeweils ein, Greifer G des Zufuhr-Roboters 23 je eines der vom Wender 6 vorgehaltenen Pi-Produkte an deren Oberseite ergreift, worauf hin der Wender 6 die von ihm gehaltenen Produkte loslässt.

Damit hält der Zufuhr-Roboter 23 nun ein Zufuhr-Set aus zwei im Überlappungsabstand AÜ in Querrichtung 11 angeordneten Reihen von je 16 Produkten, die sich in Längsrichtung 10 hinsichtlich ihrer Orientierung jeweils einander abwechseln, und auch die beiden in Querrichtung 11 nebeneinander angeordneten Produkte jeweils eines ein Pi- und eines ein Pn Produkt ist.

Falls alle Greifer-Halter des Wenders 6 und/oder alle Paar-Halter des Werkzeug W23 ausfahrbar bzw. verlagerbar sind in Querrichtung, muss die entsprechende Gruppe mit dem jeweils zweiten Element von der Steuerung diesbezüglich so angesteuert werden, dass die beiden komplementären Muster an Produkten entstehen.

Wie **Figur 1** und **1a** zeigen, wird der Spreiztisch 14 im ersten Zufuhr-Bereich 3 im Maschinen-Modul 1a, jedoch mit zwei solchen Zufuhr-Sets nebeneinander beladen, die dann hier in der Mitte des Spreiztisches 14 auf dem Schlitten 18.1 dargestellt sind, sodass der beschriebene Vorgang zweimal ablaufen muss, also der Zufuhr-Roboter 23 zweimal nacheinander ein solches Zufuhr-Set auf diesen Schlitten 18.1 setzt.

Jeder Spreiztisch 14 besitzt jedoch acht Reihen R von Sitzen S entsprechend der aufzunehmenden Produkt-Orientierung ebenfalls unterschieden in Sitze für normal orientierte Produkte, also Sn-Sitze, und Sitze für invertiert aufzusetzende Produkte, also Si-Sitze, in **Figur 1a** angedeutet durch je ein "+" für einen leeren Pi-Sitz und je ein "-" für einen leeren Pn-Sitz.

Anschließend verfährt der Schlitten z.B. 18.1 mit dem teilweise gefüllten Spreiztisch 14 darauf entlang seiner Führungsschiene 19 nach rechts zum nächsten Zufuhr-Bereich 3, hier im Maschinen-Modul 1c, mit dort endendem Anliefer-Bereich 2, und wiederum Gruppier-Kette 20, Produkt-Wender 6 und Zufuhr-Roboter 23.

Je nachdem, wieviel ganz oder teilweise gefüllte Reihen nebeneinander der Spreiztisch 14 für seine momentane Arbeitsaufgabe benötigt, wird in diesem nächsten Zufuhr-Bereich 3 ein oder zwei weitere Zufuhr-Sets wie vorbeschrieben auf dem Spreiztisch 14 abgelegt, in diesem Fall nur ein weiteres, doppelreihiges Zufuhr-Set, wie dort am Schlitten 18.2 und dessen Spreiztisch 14 dargestellt, denn in diesem Fall sollen Kartons K mit Lagen aus je drei in Längsrichtung 10 verlaufenden Reihen nebeneinander gefüllt werden wofür auf dem Spreiztisches 14 sechs Reihen mit Produkten P benötigt werden, während zwei Reihen von Sitzen leer bleiben.

Die Schlitten 18.1-18.3 , welche die entsprechend dem jeweiligen Arbeitsauftrag gefüllten Spreiztische 14 tragen, werden jeweils einzeln weiter gefahren in den Spreiz-Bereich 4, hier im Maschinen-Modul 1d, in dem sich neben und unter der Schlittenschiene 19 eine Spreiz-Station 7 befindet, die den notwendigen wenigstens einen Quer-Antrieb 16 aufweist, mit dem oder denen an dem in der Spreiz-Station positionierten Spreizstisch 14 die Querabstände der Reihen von Sitzen S so verändert werden können, dass ein - in **Figur 1**, **1a**, **1****b** aus Übersichtlichkeitsgründen nicht dargestellter, nur in **Figur 4a** dargestellter - Abfuhr-Roboter 24 im Abfuhr-Bereich 5 jeweils ein Abfuhr-Set von Produkten vom Spreiztisch 14 entnehmen und aufgeteilt in mehrere Karton-Arrays in Längsrichtung 10 hintereinander in die Kartons K umsetzen kann, die zu diesem Zweck im richtigen Längsabstand zueinander und an der richtigen Längsposition zum Spreiztisch 14 im Spreiz-Bereich 4 auf einem Behälter-Band 30, meist still stehend, vorgehalten werden

Ferner verläuft - was für die beschriebene Erfindung von untergeordneter Bedeutung ist - auf der vom Behälter-Band 30 abgewandten Seite der Schlittenschiene 19 eine weitere Schlittenschiene 19* in den Modulen 1d und 1e, auf der ein oder mehrere Puffer-Schlitten 18* in Längsrichtung 10 verfahrbar sind, die ebenfalls in Längsrichtung 10 verlaufende Reihen von Sitzen mehrfach nebeneinander mit in Reihenrichtung und Spaltenrichtung jeweils abwechselnd invertierten und normalen Sitzen Si und Sn aufweisen und vorzugsweise mit der gleichen Anzahl von Reihen R und mit der gleichen Anzahl von Sitzen S entlang einer Reihe wie die Spreiztische 14.

Diese Puffer-Schlitten 18* dienen dazu, bei dem Entleeren eines Spreiztisches 14 übrigbleibende Produkte, eine Rest-Gruppe, aufzunehmen - umgesetzt mittels eines nicht dargestellten Puffer-Roboters an einer anderen Längsposition als der Spreiz-Bereich 4, hier im Modul 1e - die übrig bleiben können, wenn in den Kartons K eine - meist oberste - Lage abgelegt werden soll, die weniger Produkte enthalten soll als die übrigen Lagen.

Ein solcher Puffer-Schlitten 18* bleibt dort meist solange, bis er so weit gefüllt ist, dass er ein oder mehrere Karton-Arrays enthält und wird dann gemäß **Figur 1b** nach links in den Abfuhr-Bereich 5 verfahren und kann dort - mittels des Abfuhr-Roboters 24, - seinen Inhalt teilweise oder vollständig in dort bereitgestellte leere Kartons K abgeben.

Wie die Reihen R von Sitzen S im Spreiz-Bereich 4 in der Spreiz-Station 7 mittels der einen oder mehreren Querantriebe 16 auf den richtigen Querabstand zueinander gebracht werden zeigen die **Figuren 3** bis **5****.**

**Figur** 3 zeigt den Spreiztisch 14 ohne den Schlitten darunter, auf dem er in aller Regel fest montiert ist und mit dem er sich nur zusammen in Längsrichtung 10 bewegen kann entlang der Schlittenschiene 19, woraus zum einen ersichtlich wird, dass der Spreiztisch 14 insgesamt acht nebeneinander liegende, in Längsrichtung 10 verlaufende Reihen R von Sitzen S aufweist, wobei sich innerhalb der Reihe R normale Sitze Sn für in der Normallage befindliche Produkte Pn mit invertierten Sitzen Si für invertiert-orientierte Produkte Si abwechseln, also die als Vertiefungen ausgebildeten Sitze entsprechend dimensioniert und zueinander positioniert sind.

Jede zweite Reihe R ist gleich, und die Reihen dazwischen besitzen an den Positionen, an denen die erstgenannten Reihen einen Si-Sitz aufweisen einen Sn-Sitz, sodass sich auch in Querrichtung 11, die im rechten Winkel zur Längsrichtung 10 verläuft, invertierte Sitze Si mit normalen Sitzen Sn abwechseln.

**Figur 3** zeigt ferner, dass die Reihen R von Sitzen auf Leisten-förmigen Tragleisten 15, hier insgesamt sechs Tragleisten 15A bis 15E, ausgebildet sind.

Die Tragleisten von links her in Querrichtung 11 beginnend, 15A, 15B und die letzte 15E tragen jeweils zwei Reihen R von Sitzen, und zwar in einem Überlappungsabstand AÜ zueinander, sodass in diesen Sitzen abgelegte entsprechend orientierte Produkte in Querrichtung 11 in der Aufsicht betrachtet einander überlappen. Zwischen den doppelreihigen Tragleisten 15B und 15E befinden sich zwei Tragleisten 15C, D, die nur je eine Reihe R von Sitzen S aufweisen.

Die **Figuren 4a** bis **4c** zeigen - betrachtet in Längsrichtung 10 - den Spreiztisch 14 mit unterschiedlichen Abständen der Tragleisten 15 in Querrichtung 11 zueinander je nachdem, wie viele Reihen das in die Kartons K umzusetzende Abfuhr-Set aus Produkten P aufweisen soll und abhängig von dem Quer-Abstand der Reihen von Greifern G, die im Werkzeug W24 - welches bei Wechsel der Reihen-Anzahl des Karton-Arrays in der Regel ebenfalls gewechselt wird - eines Abfuhr-Roboters 24 vorhanden sind.

**Figur 4a** lässt anhand der doppelreihigen Tragleisten 15.2 in Form der Tragleisten 15A, B und E erkennen, dass unter einem Überlappungsabstand AÜ von der Mitte eines Normal-Sitzes Sn zur Mitte eines in Querrichtung 11 auf insbesondere derselben oder einer in Längsrichtung leicht dazu versetzten Längs-Position daneben befindlichen inversen Sitzes Si ein solcher Abstand verstanden wird, dass auf dem entsprechenden Sitz entsprechend orientiert sitzende Produkt Pn, Pi in Querrichtung 11 einander überlappen, indem in diesem Fall der obere radial vorstehende Rand des Pn-Produktes über die Bodenfläche des Pi-Produktes oder zumindest dessen dort unten radial vorstehenden Rand ragt und analog umgekehrt.

Dagegen bedeutet Nicht-Überlappungsabstand An, dass der Quer-Abstand zwischen nebeneinander befindlichen Sitzen Si und Sn so groß ist, dass in diesem Abstand nebeneinanderstehende Produkte Pi, Pn nicht überlappen in der Horizontalen und unabhängig voneinander nach oben abgehoben werden können.

**Figur 4a** zeigt den Ausgangs-Spreizzustand:
Innerhalb der zweireihigen Tragleisten 15.2, hier den Tragleisten 15A, 15B und 15E, sind die beiden Reihen, die jeweils in Blickrichtung der Figur 4a verlaufen, bereits in einem solchen Überlappungsabstand Aü angeordnet. Zusätzlich sind die beiden einreihigen Tragleisten 15.1, hier die Tragleisten 15C und 15D, in Querrichtung 11 so nah zusammengefahren, dass sich ihre Sitze und damit auch darauf stehende entsprechend orientierte Produkte im Überlappungsabstand Aü befinden.

Dabei sind die zweireihige Tragleiste 15B und die einreihige Tragleiste 15D in Querrichtung 11 fix mit dem Grundkörper 14A des Spreiztisches 14 verbunden, der an zwei Längspositionen jeweils in Querrichtung 11 fluchtende hülsenförmige Lager 22, meist Gleitlager 22, enthält, in denen sich im in Längsrichtung 10 vorderen und hinteren Endbereich jeweils ein Führungsstab 17 quer durch den Grundkörper 14A hindurch erstreckt und beidseits aus dem Grundkörper 14A vorsteht.

Die einreihige Tragleiste 15C ist in Querrichtung fix an diesem Führungsstab 17 befestigt und damit eine Direkt-Leiste 15 d, da sie direkt gegenüber dem Grundkörper 14 A verlagerbar ist.

Die beiden äußeren, jeweils doppelreihigen, Tragleisten 15A, 15E sind verschiebbar auf diesem Führungsstab 17 angeordnet, und mittels einer Druckfeder 31 auf Abstand zu der nächst inneren, benachbarten Tragleiste 15B bzw. 15D gehalten, und gegen einen Queranschlag am jeweiligen äußeren Ende des Führungsstabes 17 gedrückt. Sie sind damit Indirekt-Leisten 15ind, da sie direkt nur gegenüber dem Führungsstab 17 und somit nur indirekt gegenüber dem Grundkörper 14 A verlagerbar sind. Durch die Federn 31 werden zusätzlich die einreihige Leiste 15C und die benachbarte einreihige Leiste 15D gegeneinandergedrückt.

Wenn also zweireihige Abfuhr-Sets von Produkten P vom Spreiztisch 14 abgenommen und in Kartons umgesetzt werden sollen, kann der Spreiztisch 14 in der unbelasteten Ausgangsstellung gemäß **Figur 4a** verbleiben und alle acht Reihen können mit Produkten besetzt werden.

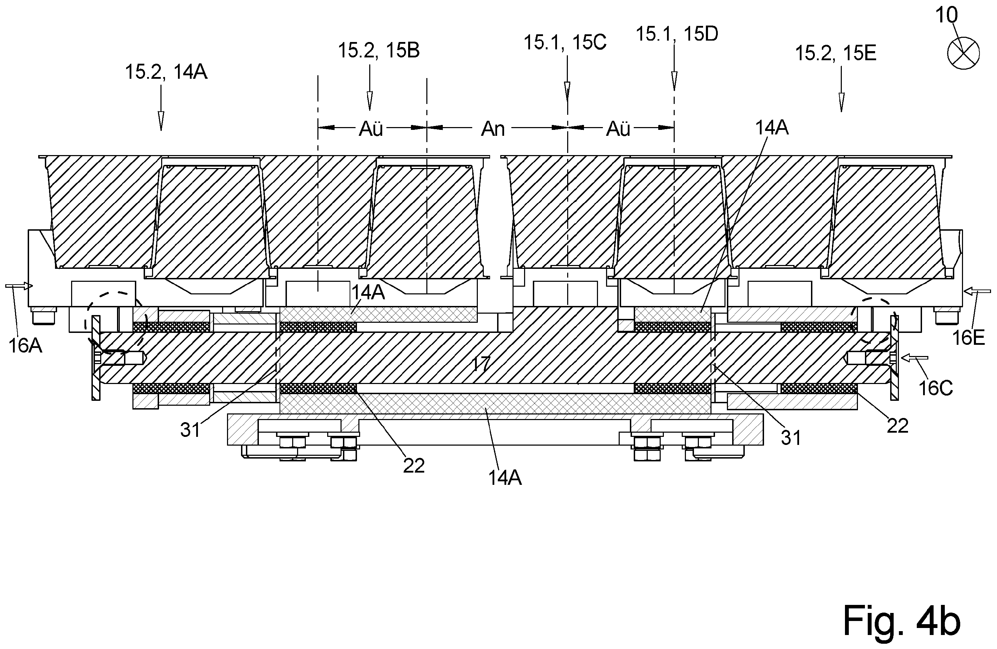

Wenn gemäß **Figur 4b** vierreihige, in Querrichtung innerhalb der 4 Reihen jeweils überlappende, Abfuhr-Sets von Produkten P zum Umsetzen in Kartons K benötigt werden, können ebenfalls alle acht Reihen mit Produkten P besetzt werden.

Vor dem Entnehmen werden dann vom Quer-Antrieb 16A die doppelreihige Tragleiste 15A und vom Quer-Antrieb 16E die doppelreihige Tragleiste 15E jeweils in Richtung aufeinander zu verlagert gegen die Kraft der Federn 31, bis sich die ersten vier Reihen von Sitzen S und die letzten vier Reihen in Querrichtung jeweils in einem Überlappungsabstand Aü zueinander befinden, die vierte und fünfte Reihe von Sitzen und darauf ruhenden Produkten P dagegen in einem Nicht-Überlappungsabstand An, sodass die vierreihigen Zufuhr-Sets von Produkten unabhängig voneinander nach oben abgehoben und umgesetzt werden können.

Da die Tragleisten 15B und 15D mit dem Grundkörper 14A in Querrichtung fix verbunden sind, dienen diese als Anschläge beim Heranschieben der äußeren Tragleisten 15A, 15E.

Sollen dagegen dreireihige Abfuhr-Sets von Produkten P gemäß **Figur 4c** erzeugt werden, so ist zum einen klar, dass wegen acht Reihen insgesamt nur zwei dreireihige Abfuhr-Sets erzeugt werden können, also zwei Reihen von Sitzen nicht zu diesen dreireihigen Abfuhr-Sets beitragen können und vorzugsweise leer bleiben, in diesem Fall die äußere Tragleiste 15A der beiden benachbart zueinander liegenden, doppelreihigen Tragleisten 15A und 15B.

Ferner ist klar, dass zwischen den Sitzen und darauf stehenden Produkten der beiden einreihigen Tragleisten 15C, 15D ein Nicht-Überlappungsabstand An erzielt werden muss.

Dies wird erreicht, indem zum einen wiederum mittels des Quer-Antriebs 16E die eine äußere doppelreihige Tragleist 15E gegen die Grundkörper-fixe einreihige Tragleiste 15D auf einen Überlappungs-Abstand Aü, insbesondere bis auf Anlage dieser Tragleisten gegeneinander, gedrückt wird und als Gegenhalter wiederum der Querantrieb 16A die Tragleiste 15A gegen die Grundkörper fixe doppelreihige Tragleiste 15B drückt.

Dies ist notwendig, damit durch anschließendes Beaufschlagen mittels des Antriebes 16C, der nicht auf die jeweilige Tragleiste einwirkt, sondern auf den Führungsstab 17, die stab-feste, einreihige Tragleiste 15C von der in der Ausgangsstellung an der Tragleiste 15D befindlichen Stellung weg und bis auf einen Überlappungsabstand AÜ an die benachbarte doppelreihige Grundkörper-feste Tragleiste 15B gedrückt wird.

Dann können die dreireihigen Abfuhr-Sets einzeln entnommen und in die Kartons umgesetzt werden.

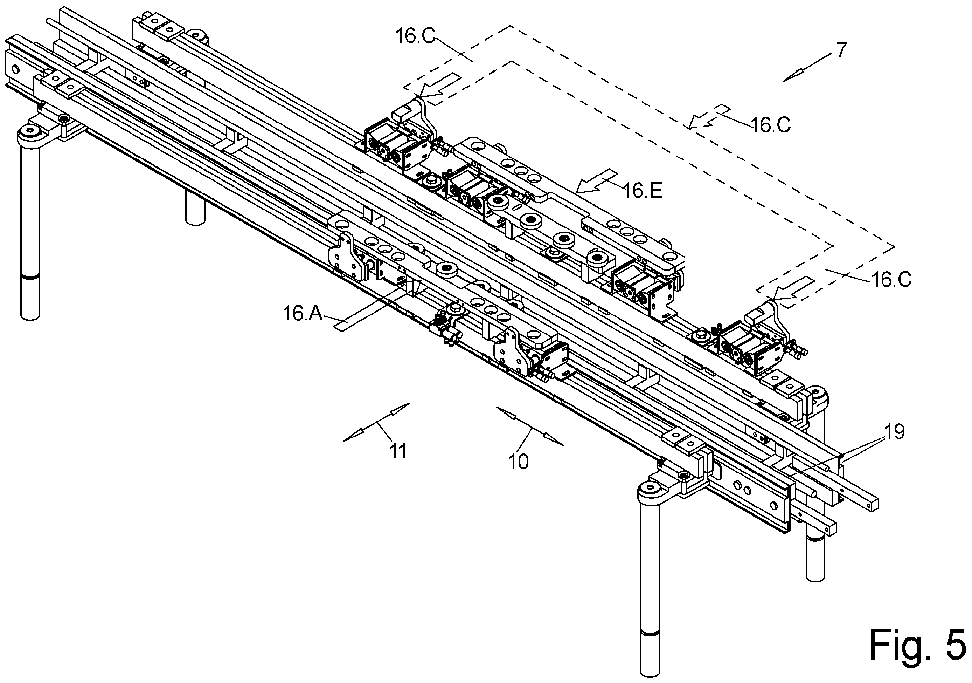

**Figur 5** zeigt die Spreiz-Station 7 mit den Quer-Antrieben 16:
Die Quer-Antriebe 16A und 16E sind auf einer Höhe angeordnet, sodass sie bei einem dazwischen in der Spreiz-Station 7 befindlichen Schlitten 18 mit Spreiztisch 14 darauf gegen die Außenseite der Tragleisten 15A bzw. 15E drücken.

Die in diesem Fall in Längsrichtung 10 beabstandeten und auf der gleichen Seite der Schlittenschiene 19 angeordneten beiden Quer-Antriebe 16C sind auf einer solchen Höhe angeordnet und an einer solchen Längsposition, dass sie gegen die Stirnseite jeweils einer der beiden Führungsstäbe 17 des in der Spreiz-Position, also an der richtigen Längsposition in der Spreiz-Station 7 stehenden, Spreiztisches 14 drücken, und die natürlich synchron betätigt werden müssen.

Diese Quer-Antriebe 16C sind auf derjenigen Seite angeordnet, dass sie den jeweiligen Führungsstab 17 von der Grundkörper-festen einreihigen Tragleiste 15D wegdrücken in Richtung der beiden benachbarten doppelreihigen Tragleisten 15A und 15B.

Natürlich könnten die beiden Quer-Antriebe 16C zu einem einzigen vereinigt werden, der auf eine angedeutete Verbindungsstange zwischen den beiden Schiebezapfen, die auf jeweils einen der beiden Führungsstäbe 17 drücken, einwirkt.

Die Quer-Antriebe sind vorzugsweise auf zwei beidseits der Schlittenschiene 19 verlaufenden Balken angeordnet, die mit dem hier nicht dargestellten Maschinengestell fest verbunden sind.

Die **Figur 1b** zeigt ferner, dass innerhalb der in Längsrichtung 10 verlaufenden Reihen von Sitzen S und damit auch die darauf ruhenden Produkte Pi, Pa keinen Überlappungsabstand AÜ in Längsrichtung 10 zueinander aufweisen, wohl jedoch die Produkte in den bereits gefüllten Kartons K.

Der Abfuhr-Roboter 24 ist hinsichtlich der Beweglichkeit seiner Greifer G, insbesondere Sauger G, am Werkzeug-Grundkörper, so ausgebildet, dass er die in Querrichtung 11, der Spaltenrichtung, jeweils benachbart liegenden, Gruppen von z.B. drei, Greifern oder Saugern G in Längsrichtung 10 relativ zum Grundkörper und relativ zueinander in einem weiten Bereich gesteuert automatisch verfahren kann. Dadurch können während des Umsetz-Vorganges vom Spreiztisch 14 in die Kartons K zum einen jeweils z.B. Vier Dreier-Gruppen in Längsrichtung 10 auf Überlappungsabstand AÜ in Längsrichtung 10 gebracht werden, und diese drei auf vier großen Karton-Arrays auf eine Längsposition, die der Längsposition der bereitgestellten Kartons K, insbesondere auf dem Behälter-Band 30, entspricht, sodass der Abfuhr-Roboter 24 jeweils ein Abfuhr-Set, in Längsrichtung 10 in drei mal vier Produkte große Karton-Arrays unterteilen und je eines davon in je einem Karton K auf dem Behälter-Band 30 ablegen kann.

### BEZUGSZEICHENLISTE

- 1a, b: Maschinengestell, Gestell-Modul
- 2: Anliefer-Bereich
- 3: Zufuhr-Bereich
- 4: Spreiz-Bereich
- 5: Abfuhr-Bereich
- 6: Wender
- 6.1-6.18: Paar-Halter
- 6': Schwenkachse
- 6A: Grundkörper
- 7: Spreiz-Station
- 8: Transportvorrichtung
- 9: Sicherheitstür
- 10: Längsrichtung der Reihen,
- 10*: Haupt-Transportrichtung
- 11: horizontale Querrichtung zu 10
- 11*: horizontale Querrichtung zu 10*
- 12: Vertikale
- 13: Gruppier-Vorrichtung
- 14: Spreiztisch
- 14A: Grundkörper
- 15: Tragleiste
- 15A - E: Tragleiste
- 15.1: einreihige Tragleiste
- 15.2: doppelreihige Tragleiste
- 15d: Direkt-Leiste
- 15ind: Indirekt-Leiste
- 16: Quer-Antrieb
- 17: Führungsstab
- 18.1/2/3: Schlitten
- 19: Schlitten-Schiene
- 20: Gruppier-Kette
- 21: Mitnehmer
- 22: Lager, Gleitlager
- 23: Zufuhr-Roboter
- W23: Werkzeug
- 23.1-23.16: Paar-Halter
- 24: Abfuhr-Roboter
- W24: Werkzeug
- 25: Produkt-zu Förderer
- 26: Aufrichte-Station
- 27: Zuschnitt-Magazin
- 28: Verschließ-Station
- 29: Karton-Abförderer
- 30: Behälterband
- 31: Druckfeder

- G: Greifer, Sauger
- K: Umverpackung, Karton
- P: Produkt
- Pn: Produkt in Normallage, Produkt in Ausgangs-Lage
- Pi: Produkt in inverser Lage, gedrehtes Produkt, anders orientiertes Produkt
- R: Reihe
- S: Sitz
- Sn: Sitz für Produkt in Normallage, Produkt in Ausgangs-Lage
- Si: Sitz für Produkt in inverser Lage, gedrehtes Produkt, anders orientiertes Produkt

## Patentansprüche

1. **Verpackungsmaschine** mit einer Gruppiervorrichtung (13) umfassend
- einen Spreiz-Bereich (4) mit wenigstens einem Spreiztisch (14) mit einem Grundkörper (14A) und mehreren in ihrem Querabstand verstellbaren, Leisten-förmigen Tragleisten (15), die jeweils mindestens eine in Längsrichtung (10) verlaufende Reihe (R) von Sitzen (S) für je ein Produkt (P) aufweisen,
- wenigstens einen Quer-Antrieb (16) zum Verstellen des Querabstandes, zum Erzeugen von einlagigen Gruppen mit einer geraden oder ungeraden Anzahl von Reihen (R) aus Produkten (P), wobei die Produkte (P) innerhalb der Gruppe in der Aufsicht betrachtet in Querrichtung (11) hierzu einander teilweise überlappen, und Einsetzen der Gruppe in eine Umverpackung (K), etwa einen Karton (K),
wobei die Verpackungsmaschine ferner aufweist
- einen Anliefer-Bereich (2), in dem die Produkte (P), insbesondere in einer oder mehreren Reihen (R), angeliefert werden,
- einen Zufuhr-Bereich (3) mit einem Zufuhr-Roboter (23) zum Umsetzen eines Zufuhr-Sets aus Produkten vom Anliefer-Bereich (2) auf den Spreiztisch (14),
- einen Abfuhr-Bereich (4) mit einem Abfuhr-Roboter (24) zum Umsetzen eines Abfuhr-Sets aus Produkten (P) vom Spreiztisch (14) weg direkt oder indirekt in die Umverpackung (K),
**dadurch gekennzeichnet, dass**
- mehrere zweireihige Tragleisten (15.2) mit je zwei in Querrichtung (11) relativ zueinander nicht bewegbaren Reihen (R) von Sitzen (S) vorhanden sind,
- dazwischen wenigstens zwei in Querrichtung (11) relativ zueinander bewegbare Tragleisten (15.1), insbesondere in Querrichtung (11) benachbart zueinander, vorhanden sind mit nur einer Reihe (R) von Sitzen,
- wobei der Spreiztisch-Antrieb (16) so ausgebildet ist, dass er in der Lage ist, die beiden einreihigen Tragleisten (15.1) wahlweise gegeneinander oder auseinander gegen die jeweils benachbarten, insbesondere zweireihigen, Tragleisten (15.2) anzunähern, insbesondere bis auf Kontakt.
(Aufbau Spreiztisch allgemein:)

2. Verpackungsmaschine nach Anspruch 1,
**dadurch gekennzeichnet, dass**
- wenigstens zwei der Tragleisten (15) eines Spreiztisches (14), jedoch keine direkt zueinander benachbarten Tragleisten (15), in Querrichtung (11) fest mit dem Grundkörper (14A) des Spreiztisches (14) verbunden sind,
die restlichen Tragleisten (15)
- entweder jeweils, insbesondere alle, als Direktleisten (15d) direkt relativ zum Grundkörper (14A), insbesondere unabhängig voneinander, quer verlagerbar sind,
- oder von den nicht querfesten Tragleisten wenigstens eine Direktleiste (15d) direkt relativ zum Grundkörper (14A) quer verlagerbar ist,
- die übrigen Tragleisten (15) als nicht querfeste Indirektleisten (15ind) indirekt relativ zum Grundkörper (14A) verlagerbar sind, indem sie direkt relativ zur Direktleiste (15d) quer verlagerbar sind,
insbesondere
die Indirektleisten (15ind) die äußersten, insbesondere doppelreihigen, Tragleisten (15) des Spreiztisches (14) sind
und/oder
- von der wenigstens einen Direktleiste (15d) auf mindestens einer Seite, insbesondere beiden Seiten, in Querrichtung (11) mindestens ein, besser zwei in Längsrichtung beabstandete und parallel zueinander verlaufende, Führungsstäbe (17) abstreben,
- die wenigstens eine Indirektleiste (15ind) entlang des Führungsstabes (17) formschlüssig geführt ist.

3. Verpackungsmaschine nach einem der vorhergehenden Ansprüche, **dadurch gekennzeichnet, dass**
- eine doppelreihige Tragleiste (15.2) unmittelbar neben einer von zwei einreihigen Tragleisten (15.1) angeordnet ist,
- die doppelreihige Tragleiste (15.2) und die davon abgewandte der beiden einreihigen Tragleisten (15.1) querfest am Grundkörper (14A) befestigt sind,
- außen angrenzend an die beiden querfesten Tragleisten (15) jeweils eine doppelreihige Tragleiste (15.2) angeordnet ist,
insbesondere
- im Ausgangszustand die beiden einreihigen Tragleisten (15.1) einander kontaktieren, jedoch zu den benachbarten doppelreihigen Tragleisten (15.2) sowie diese untereinander einen Ausgangs-Abstand einnehmen
und/oder
- die nicht querfeste einreihige Tragleiste (15.1) eine Direktleiste (15d) ist.

4. Verpackungsmaschine nach Anspruch 3,
**dadurch gekennzeichnet, dass**
- die nicht querfeste einreihige Tragleiste (15C) mittels eines gesteuerten Quer-Antriebes (16C) in Querrichtung (11) bewegbar ist, der insbesondere auf die Stirnseite des Führungsstabes (17) einwirkt,
- entweder die beiden äußeren doppelreihigen Tragleisten (15A, 15E) mittels eines jeweils separaten Quer-Antriebes (16A, 16E) in Querrichtung (11) bewegbar sind
- oder die beiden äußeren doppelreihigen Tragleisten (15A, 15E) mittels eines gemeinsamen Quer-Antriebes und einer Gegensynchron-Mechanik in Querrichtung (11) gegensynchron bewegbar sind.
(Alternative Lösung:)

5. Verpackungsmaschine nach einem der vorhergehenden Ansprüche, **dadurch gekennzeichnet, dass**
- eine, insbesondere je eine, doppelreihige Tragleiste (15.2) unmittelbar neben einer von zwei einreihigen Tragleisten (15.1) jeweils unabhängig voneinander quer verlagerbar zum Grundkörper (14A) angeordnet sind,
- außen angrenzend an dieses Paket jeweils eine doppelreihige Tragleiste (15.2) querfest zum Grundkörper (14A) angeordnet ist,
- insbesondere im Ausgangszustand die beiden einreihigen Tragleisten (15.1) einander kontaktieren, jedoch zu den benachbarten doppelreihigen Tragleisten (15.2) sowie diese untereinander einen Ausgangs-Abstand einnehmen,
wobei vorzugsweise
- die beiden einreihigen Tragleisten (15.1) mittels eines gesteuerten 1. Quer-Antriebes (16.1) und einer gegensynchron-Mechanik in Querrichtung (11) gegensynchron bewegbar sind,
- die doppelreihige Tragleiste (15.2) einerseits und die beiden einreihigen Tragleisten 15.1) gemeinsam andererseits mittels eines gesteuerten 2. Quer-Antriebes (16.2) und einer Gegensynchron-Mechanik gegensynchron in Querrichtung (11) verlagerbar sind.

6. Verpackungsmaschine nach einem der vorhergehenden Ansprüche, wobei die Produkte (P) innerhalb der Gruppe in Längsrichtung (10) und/oder in Querrichtung (11) jeweils abwechselnd unterschiedlich orientiert sind, insbesondere auf dem Fuß stehend (Pn) oder invers auf dem Kopf stehend (Pi),
**dadurch gekennzeichnet, dass**
- jeder Zufuhr-Bereich (3) einen Produkt-Wender (6) mit einer Anzahl von Greifern (G), insbesondere Saugern, insbesondere gemäß der Anzahl eines halben Zufuhr-Sets, aufweist, die zwischen einer ersten Funktionsstellung angeordnet in nur einer Reihe und einer zweiten Funktionsstellung angeordnet in zwei Reihen von Greifern (G) verstellt werden können und
- um eine horizontale Schwenkachse (6'), insbesondere gemeinsam mit dem Basiskörper (6A) des Produkt-Wenders (6), verschwenkt werden können
und/oder
- der Zufuhr-Roboter (23) ein Werkzeug (W23) mit mindestens einer, insbesondere zwei, Reihen von Greifern (G), insbesondere Saugern, zum Halten je eines Produktes (P) aufweist.

7. Verpackungsmaschine nach einem der vorhergehenden Ansprüche, **dadurch gekennzeichnet, dass**
- mehrere innerhalb der Maschine bewegliche, insbesondere unabhängig voneinander bewegliche, Spreiztische (14 1 - 14.3) vorhanden sind,
- der wenigstens eine Quer-Antrieb (16) in einer, insbesondere nur einer, Spreiz-Station (7) angeordnet ist, zu der die beladenen Spreiztische (14.1 - 14.3) verfahrbar sind
und/oder
- jeder Spreiztisch (14.1 - 14.3) mittels einer Transportvorrichtung (8) verfahrbar ist,
- insbesondere die Transportvorrichtung (8) Schlitten (18) umfasst, die insbesondere unabhängig voneinander entlang einer Führung, insbesondere einer Führungsschiene (19) verfahrbar sind.

8. Verpackungsmaschine nach einem der vorhergehenden Ansprüche, **dadurch gekennzeichnet, dass**
- mehrere Anlieferungs-Bereiche (2.1, 2.2) und Zufuhr-Bereiche (3.1, 3.2) vorhanden sind, in denen je ein Spreiztisch (14) nur teilweise oder vollständig beladen werden kann.

9. Verpackungsmaschine nach einem der vorhergehenden Ansprüche, **dadurch gekennzeichnet, dass**
im Werkzeug (W23) des Zufuhr-Roboters (23) je ein Paar von zwei, in Querrichtung (11) benachbarte Greifer (G) an einem Paar-Halter (23.1 - 23.16), befestigt sind und diese Paar-Halter (23.1 - 23.16) in Querrichtung (11) verfahrbar sind zwischen der ersten und der zweiten Funktionsstellung
und/oder
- das Werkzeug (W23) des Zufuhr-Roboters (23) zwischen einer ersten Funktionsstellung, in der die Greifer in zwei in Längsrichtung (10) verlaufenden Reihen von Greifern (G) angeordnet sind und einer zweiten Funktionsstellung, in der die Greifer (G) in drei Reihen von Greifern (G) angeordnet sind, bewegt werden kann.

10. Verpackungsmaschine nach einem der vorhergehenden Ansprüche, **dadurch gekennzeichnet, dass**
- das Werkzeug (W24) des Abfuhr-Roboters (24) mehrere, insbesondere zwei in einem fixen Querabstand angeordnete, Reihen von Greifern (G), insbesondere Saugern, aufweist,
- die in Querrichtung (11) benachbarten, etwa auf gleicher Längsposition entlang der Reihen angeordneten Greifer (G) als Quergruppe an einem Quergruppen-Halter, insbesondere Paar-Halter, befestigt sind und diese in Längsrichtung (10) verfahrbar sind zwischen wenigstens einer ersten, weiter beabstandeten und der zweiten, näher beabstandeten oder kontaktierenden, Funktionsstellung.

11. Verpackungsmaschine nach einem der vorhergehenden Ansprüche, **dadurch gekennzeichnet, dass**
- ein Puffer für nach dem Befüllen der Kartons (K) vom Spreiztisch (14) aus auf dem Spreiztisch (14) verbleibende, insbesondere mit einer Anzahl geringer als ein Karton-Array, Produkte (P), vorhanden ist,
- insbesondere der Puffer in Form von in Längsrichtung (10) verlaufenden Reihen von Sitzen (S), die sich insbesondere in Querrichtung (11) in einem Überlappungs-Abstand befinden, auf einem Puffer-Schlitten (18*) ausgebildet ist,
- der insbesondere entlang einer Pufferschiene (19*) verfahrbar ist und in Durchlaufrichtung (10*) die Längsposition der Spreiz-Station (7) anfahren kann in einem solchen Querabstand zum Abfuhr-Roboter (24), dass dieser mit seinem Werkzeug (W24) Produkte (PE) vom Puffer-Schlitten (18*) entnehmen und in Kartons (K) umsetzen kann.

12. **Verfahren** zum Erzeugen mindestens einer mehrreihigen, einlagigen Gruppe von Produkten (P) aus, insbesondere in einer oder mehreren Reihen, angelieferten Produkten und Einsetzen der Gruppe oder von Teilen der Gruppe als Karton-Array in eine Umverpackung, etwa einen Karton (K),
- wobei die Reihen-Anzahl der Gruppe wahlweise eine gerade oder eine ungerade Anzahl sein kann, insbesondere die Reihen-Anzahl 2, 3 oder 4 sein kann,
- wobei die Produkte (P) innerhalb der Gruppe in der Aufsicht betrachtet spätestens beim Einsetzen in die Umverpackung in Reihen-Richtung, der Längsrichtung (10), und/oder in Querrichtung (11) hierzu einander teilweise überlappen,
- insbesondere die Produkte (P) innerhalb der Gruppe in Längsrichtung (10), und/oder in Querrichtung (11) jeweils abwechselnd unterschiedlich orientiert sind,
insbesondere mittels einer Verpackungsmaschine gemäß einem der vorhergehenden Ansprüche,
wobei
- mindestens ein Spreiztisch (14) vorhanden ist, auf dem jeweils mehrere Tragleisten (15) mit nur einer oder zwei Reihen von Sitzen für je ein Produkt in ihrem Querabstand verstellbar zueinander angeordnet sind,
- wobei zwei einreihige Tragleisten (15.1) in Querrichtung (11) benachbart zueinander angeordnet sind zwischen zwei zweireihigen Tragleisten (15.2),
**dadurch gekennzeichnet, dass**
die beiden einreihigen Tragleisten (15.1) zwischen
- für die Bildung einer Gruppe mit gerader Reihen-Anzahl einer eng benachbarten, insbesondere kontaktierenden, Lage nebeneinander
- und einer für die Bildung einer Gruppe mit einer ungeraden Reihen-Anzahl weiter beabstandeten Lage auseinander und eng benachbart, insbesondere kontaktierend, zu der benachbarten doppelreihigen Tragleiste (15.2)
hin und her verstellt werden.

13. Verfahren nach Anspruch 12,
**dadurch gekennzeichnet, dass**
zur Bildung von 4-reihigen Gruppen beide einreihigen Tragleisten (15.1) eng benachbart, insbesondere in Anlage an, die eine benachbarte doppelreihige Tragleiste (15.2) gebracht werden und auf der anderen Seite der beiden einreihigen Tragleisten (15.1) zwei doppelreihige Tragleisten (15.2) in eine eng benachbarte Lage zueinander gebracht werden, mit Abstand zu den beiden einreihigen Tragleisten (15.1) in Querrichtung (11).

14. Verfahren nach einem der vorhergehenden Verfahrensansprüche,
**dadurch gekennzeichnet, dass**
die Tragleisten (15) so angeordnet werden, dass bei Paketen mit eng benachbarten 2, 3 oder 4 Reihen von Sitzen (S) der Quer-Abstand zwischen den Paketen von Sitzen (S) und den Tragleisten (15), die sie tragen, immer der gleiche ist und/oder
- die Produkte (P) dem Spreiztisch (14) in 2-reihigen Zufuhr-Sets zugeführt werden,
- wobei innerhalb des Zufuhr-Sets sowohl entlang der Reihen als auch quer dazu die Produkte (P) abwechselnd in einer von zwei unterschiedlichen Orientierungen, insbesondere normal auf dem Fuß stehend (Pn) oder auf dem Kopf stehend (Pi), vorliegen.

15. Verfahren nach einem der vorhergehenden Verfahrensansprüche,
**dadurch gekennzeichnet, dass**
das Zufuhr-Set erzeugt wird, indem
- eine 1. Reihe von Produkten (P) entsprechend der Anzahl der Hälfte eines Zufuhr-Sets mit in einer 1. Orientierung vorliegenden Produkten (P) ergriffen wird,
- das 2. und jedes andere geradzahlige Produkt der Reihe in Querrichtung (11) versetzt wird in eine parallele Reihe, sodass die Produkte auf einer 1. Zickzack-Linie (Z1) liegen,
- alle diese Produkte, insbesondere gemeinsam, gewendet werden in eine 2. Orientierung,
- eine andere Reihe von Produkten (P) entsprechend der Anzahl der Hälfte eines Zufuhr-Sets mit in einer 1. Orientierung vorliegenden Produkten (P) ergriffen wird,
- von dieser 1., gewendeten Reihe das 1. und jedes andere ungeradzahlige Produkt (P) in Querrichtung (11) versetzt wird in eine parallele Reihe, sodass die Produkte auf einer 2. Zickzack-Linie (Z2) liegen,
- die gewendeten zwischen den ungewendeten Produkten (P) gemeinsames als Zufuhr-Set festgehalten werden.

16. Verfahren nach einem der vorhergehenden Verfahrensansprüche,
**dadurch gekennzeichnet, dass**
- eine nach dem Umsetzen der Karton-Arrays in die Kartons (K) auf dem Spreiztisch (14) verbliebene Rest-Gruppe von Produkten (P) in einen Puffer umgesetzt wird,
- insbesondere unter Drehung der Rest-Gruppe um eine aufrechte Achse,
- nach Erreichen eines einlagigen Füllstandes des Puffers, der mindestens ein Karton-Array umfasst, vorzugsweise so viele Karton-Arrays wie aus einer Abfuhr-Gruppe erzielt werden können, mindestens ein, vorzugsweise alle erzielbaren, Karton-Arrays aus dem Füllstand des Puffers entnommen und, insbesondere direkt, in Kartons (K) umgesetzt werden.

## Claims

1. **Packaging machine** with a grouping device (13) comprising
- a spreading area (4) with at least one spreading table (14) with a base body (14A) and a plurality of bar-shaped support bars (15) adjustable in their transverse spacing, each having at least one row (R) of seats (S) extending in a longitudinal direction (10), each for one product (P),
- at least one transverse drive (16) for adjusting the transverse spacing, for producing single-layer groups having an even or uneven number of rows (R) of products (P), the products (P) within the group partially overlapping one another as viewed in plan in a transverse direction (11), and for inserting the group into an outer package (K), for example, a carton (K),
wherein the packaging machine further comprises
- a delivery area (2) in which the products (P) are delivered, in particular in one or more rows (R),
- a feeding area (3) comprising a feeding robot (23) for transferring a feeding set of products from the delivery area (2) to the spreading table (14),
- a discharge area (4) with a discharge robot (24) for transferring a discharge set of products (P) away from the spreading table (14) directly or indirectly into the outer package (K),
**characterised in that**
- a plurality of double-row support bars (15.2) are provided, each having two rows (R) of seats (S) which cannot be moved relative to one another in the transverse direction (11),
- therebetween there are at least two support bars (15.1) movable relative to one another in the transverse direction (11), in particular adjacent to one another in the transverse direction (11) having only one row (R) of seats,
- the spreading table drive (16) being embodied in such a way that it is capable of bringing the two single-row support bars (15.1) selectively towards one another, or away from one another towards adjacent, in particular double-row support bars (15.2), in particular until contact.
(Structure spreading table in general:)

2. Packaging machine according to Claim 1,
**characterised in that**
- at least two of the support bars (15) of a spreading table (14), but no support bars (15) directly adjacent to each other, are fixedly connected in the transverse direction (11) to the base body (14A) of the spreading table (14),
the remaining support bars (15)
- either are each, in particular all, displaceable transversely as direct bars (15d) directly relative to the base body (14A), in particular independently of one another,
- or at least one direct bar (15d) is transversely displaceable directly relative to the base body (14A) by means of the non-transversely fixed support bars,
- the remaining support bars (15) are indirectly displaceable relative to the base body (14A) as non-transversely fixed indirect bars (15ind) by being transversely displaceable directly relative to the direct bar (15d),
in particular
the indirect bars (15ind) are the outermost, in particular double-row, support bars (15) of the spreading table (14)
and/or
- at least one, preferably two guide rods (17) that are spaced apart in the longitudinal direction and run parallel to one another extend from the at least one direct bar (15d) in the transverse direction (11) on at least one side, in particular both sides,
- the at least one indirect bar (15ind) is positively guidable along the guide rod (17).

3. Packaging machine according to any one of the preceding claims,
**characterised in that**
- a double-row support bar (15.2) is arranged immediately adjacent to one of two single-row support bars (15.1),
- the double-row support bar (15.2) and the other of the two single-row support bars (15.1) facing away therefrom are fixed transversely to the base body (14A),
- another double-row support bar (15.2) is arranged on an outside adjacent to each of the two transversely fixed support bars (15),
in particular
- in an initial state, the two single-row support bars (15.1) contact one another but are at an initial distance from the adjacent double-row support bars (15.2) and these from one another
and/or
- the non-transversely fixed single-row support bar (15.1) is a direct bar (15d).

4. Packaging machine according to Claim 3,
**characterised in that**
- the non-transversely fixed single-row support bar (15C) is movable in the transverse direction (11) by a controlled transverse drive (16C) which acts in particular on the end side of the guide rod (17),
- either the two outer double-row support bars (15A, 15E) can be moved in the transverse direction (11) by a separate transverse drive (16A, 16E) in each case
- or the two outer double-row support bars (15A, 15E) can be moved in opposite synchronism in the transverse direction (11) by a common transverse drive and a counter-synchronous mechanism.
(Alternative solution:)

5. Packaging machine according to any one of the preceding claims,
**characterised in that**
- a, in particular in each case one, double-row support bar (15.2) is arranged immediately adjacent to one of two single-row support bars (15.1), each of the two single-row support bars independently of the other is transversely displaceable with respect to the base body (14A),
- in each case a double-row support bar (15.2) is arranged transversely fixed to the base body (14A) on an outside adjacent to this package,
- in particular in an initial state, the two single-row support bars (15.1) contact one another, but have an initial distance from the adjacent double-row support bars (15.2) and these from one another,
wherein preferably
- the two single-row support bars (15.1) can be moved in opposite synchronism in the transverse direction (11) by means of a controlled first transverse drive (16.1) and a counter-synchronous mechanism,
- the double-row support bar (15.2) on the one hand and the two single-row support bars (15.1) together on the other hand can be displaced counter-synchronously in the transverse direction (11) by means of a controlled second transverse drive (16.2) and a counter-synchronous mechanism.

6. Packaging machine according to any one of the preceding claims,
wherein the products (P) within the group are oriented alternately in the longitudinal direction (10) and/or in the transverse direction (11), in particular standing on the foot (Pn) or inversely standing on the head (Pi),
**characterised in that**
- each feeding area (3) comprises a product flipper (6) with a number of grippers (G), in particular suckers, in particular according to the number of half a feeding set, which can be adjusted between a first functional position arranged in only one row and a second functional position arranged in two rows of grippers (G), and
- can be pivoted about a horizontal pivot axis (6'), in particular together with the base body (6A) of the product flipper (6),
and/or
- the feeding robot (23) has a tool (W23) with at least one, in particular two, row(s) of grippers (G), in particular suckers, for holding one product (P) each.

7. Packaging machine according to any one of the preceding claims,
**characterised in that**
- a plurality of spreading tables (14.1 - 14.3) are provided which are movable inside the machine, in particular independently of one another,
- the at least one transverse drive (16) is arranged in one, in particular only one, spreading station (7) to which the loaded spreading tables (14.1 - 14.3) can be moved
and/or
- each spreading table (14.1 - 14.3) is movable by means of a transport device (8),
- in particular the transport device (8) comprises slides (18) which can be moved in particular independently of one another along a guide, in particular a guide rail (19).

8. Packaging machine according to any one of the preceding claims,
**characterised in that**
- a plurality of delivery areas (2.1, 2.2) and feeding areas (3.1, 3.2) are provided, in each of which a spreading table (14) can be loaded only partially or completely.

9. Packaging machine according to any one of the preceding claims,
**characterised in that**
in the tool (W23) of the feeding robot (23), a pair of two grippers (G) adjacent in the transverse direction (11) is fixed to each pair holder (23.1 - 23.16) and these pair holders (23.1 - 23.16) are movable in transverse direction (11) between a first functional position and a second functional position
and/or
- the tool (W23) of the feeding robot (23) is movable between a first functional position, in which the grippers are arranged in two rows of grippers (G) extending in the longitudinal direction (10), and a second functional position, in which the grippers (G) are arranged in three rows of grippers (G).

10. Packaging machine according to any one of the preceding claims,
**characterised in that**
- the tool (W24) of the discharge robot (24) has a plurality of rows, in particular two arranged at a fixed transverse distance, of grippers (G), in particular suckers,
- the grippers (G) adjacent in the transverse direction (11) and arranged approximately at the same longitudinal position along the rows are fastened as a transverse group to a transverse group holder, in particular pair holder, and the holders are movable in the longitudinal direction (10) between at least a first, more widely spaced, functional position and a second, more closely spaced or contacting, functional position.

11. Packaging machine according to any one of the preceding claims,
**characterised in that**
- a buffer is provided for products (P) remaining on the spreading table (14) after the carton (K) has been filled from the spreading table (14), in particular with a number smaller than a carton array,
- in particular the buffer in the form of rows of seats (S) running in the longitudinal direction (10), which are located at an overlapping distance in particular in the transverse direction (11), is formed on a buffer slide (18*),
- which can be moved in particular along a buffer rail (19*) and can approach the longitudinal position of the spreading station (7) in a passage direction (10*) at such a transverse distance from the discharge robot (24) that the latter can remove products (PE) from the buffer slide (18*) with its tool (W24) and transfer them into cartons (K).

12. **Method** for producing at least one multi-row, single-layer group of products (P) from products delivered in particular in one or more rows, and inserting the group or parts of the group as a carton array into an outer package, for example, a carton (K),
- wherein the number of rows of the group can optionally be an even or an odd number, in particular the number of rows can be 2, 3 or 4,
- wherein the products (P) within the group, viewed in plan view, partially overlap one another in the longitudinal direction (10) and/or in a transverse direction (11) thereto at the latest upon insertion into the outer package,
- in particular the products (P) within the group are oriented alternately differently in the longitudinal direction (10) and/or in the transverse direction (11),
in particular by means of a packaging machine according to any one of the preceding claims,
wherein
- at least one spreading table (14) is provided, on which in each case a plurality of support bars (15) with only one or two rows of seats for one product each are arranged adjustably with respect to one another in their transverse spacing,
- wherein two single-row support bars (15.1) are arranged adjacent to one another in the transverse direction (11) between two double-row support bars (15.2)
**characterised in that**
the two single-row support bars (15.1) can be moved back and forth between
- a closely adjacent, in particular contacting, position next to one another for formation of a group with an even number of rows
- and a position further apart for forming a group with an odd number of rows and closely adjacent to, in particular contacting, the adjacent double-row support bar (15.2).

13. Method according to Claim 12,
**characterised in that**
for forming 4-row groups, both single-row support bars (15.1) are brought closely adjacent, in particular bearing against, one adjacent double-row support bar (15.2), and on the other side of the two single-row support bars (15.1) two double-row support bars (15.2) are brought into a closely adjacent position to one another, at a distance from the two single-row support bars (15.1) in the transverse direction (11).

14. Method according to any one of the preceding method claims,
**characterised in that**
the support bars (15) are arranged in such a way that, for packages with 2, 3 or 4 closely adjacent rows of seats (S), the transverse distance between the packages of seats (S) and the support bars (15) which support them is always the same and/or
- the products (P) are fed to the spreading table (14) in 2-row feed sets,
- wherein within the feed set, both along the rows and transversely thereto, the products (P) are alternately present in one of two different orientations, in particular normally standing on the foot (Pn) or standing on the head (Pi).

15. Method according to any one of the preceding method claims,
**characterised in that**
the feed set is generated by
- gripping a first row of products (P) corresponding to the number of half of a feed set having products (P) present in a first orientation,
- the 2nd and each other even-numbered product of the row is displaced in transverse direction (11) into a parallel row so that the products are on a first zigzag line (Z1),
- all these products are flipped, in particular jointly, into a second orientation,
- another row of products (P) corresponding to the number of half of a feed set with products (P) present in the first orientation is gripped,
- from this first turned row, a first and each other odd-numbered product (P) is moved in transverse direction (11) to a parallel row, so that the products lie on a second zigzag line (Z2),
- the turned products are held in common between the un-turned products (P) as a feed set.

16. Method according to any one of the preceding method claims,
**characterised in that**
- a remaining group of products (P) remaining on the spreading table (14) after the transfer of the carton arrays into the cartons (K) is transferred to a buffer,
- in particular with rotation of the remaining group about a vertical axis,
- after reaching a single-layer filling level of the buffer, which comprises at least one carton array, preferably as many carton arrays as can be achieved from a discharge group, at least one, preferably all, obtainable carton array(s) is/are removed from the filling level of the buffer and is/are transferred into cartons (K), in particular directly.

## Revendications

1. **Machine d'emballage** avec un dispositif de groupage (13) comprenant
- une zone d'écartement (4) avec au moins une table d'écartement (14) avec un corps de base (14A) et plusieurs lattes de support (15) en forme de lattes, réglables en distance transversale, qui présentent chacune au moins une rangée (R) de sièges (S) s'étendant dans le sens longitudinal (10) pour un produit (P) chacun,
- au moins un entraînement transversal (16) pour régler la distance transversale, pour générer des groupes à une seule couche avec un nombre pair ou impair de rangées (R) de produits (P), les produits (P) à l'intérieur du groupe se chevauchant partiellement dans le sens transversal (11) vus de dessus, et pour insérer le groupe dans un suremballage (K), par exemple un carton (K),
la machine d'emballage comprenant en outre
- une zone de livraison (2) dans laquelle les produits (P) sont livrés, en particulier en une ou plusieurs rangées (R),
- une zone d'alimentation (3) avec un robot d'alimentation (23) pour transférer un lot d'alimentation de produits de la zone de livraison (2) sur la table d'écartement (14),
- une zone d'évacuation (4) avec un robot d'évacuation (24) pour transférer un lot d'évacuation de produits (P) de la table d'écartement (14) directement ou indirectement dans le suremballage (K),
**caractérisé en ce que**
- il existe plusieurs lattes de support à double rangée (15.2) avec chacune deux rangées (R) de sièges (S) non mobiles l'une par rapport à l'autre dans le sens transversal (11),
- entre lesquelles se trouvent au moins deux lattes de support (15.1) mobiles l'une par rapport à l'autre dans le sens transversal (11), en particulier adjacentes l'une à l'autre dans le sens transversal (11), avec une seule rangée (R) de sièges,
- l'entraînement de la table d'écartement (16) étant conçu de manière à pouvoir rapprocher les deux lattes de support (15.1) à une rangée, au choix l'une de l'autre ou les éloigner l'une de l'autre contre les lattes de support (15.2) adjacentes, en particulier à double rangée, en particulier jusqu'à ce qu'elles soient en contact.
(Structure générale de la table d'écartement :)

2. Machine d'emballage selon la revendication 1,
**caractérisée en ce que**
- au moins deux des lattes de support (15) d'une table d'écartement (14), mais pas de lattes de support (15) directement adjacentes, sont fixes dans le sens transversal (11) au corps de base (14A) de la table d'écartement (14), les lattes de support restantes (15)
- soit chacune, en particulier toutes, peuvent être déplacées transversalement en tant que lattes directes (15d) par rapport au corps de base (14A), en particulier indépendamment les unes des autres,
- soit parmi les lattes de support non fixes dans le sens transversal, au moins une latte directe (15d) peut être déplacée transversalement par rapport au corps de base (14A),
- les autres lattes de support (15) peuvent être déplacées indirectement par rapport au corps de base (14A) en tant que lattes indirectes (15ind) non fixes dans le sens transversal, **en ce qu'**elles peuvent être déplacées transversalement directement par rapport à la latte directe (15d),
en particulier
les lattes indirectes (15ind) sont les lattes de support (15) les plus à l'extérieur, en particulier à double rangée, de la table d'écartement (14) et/ou
- s'écartent transversalement (11) de ladite au moins une latte directe (15d) sur au moins un côté, en particulier sur les deux côtés, au moins une, de préférence deux barres de guidage (17) espacées dans le sens longitudinal et parallèles l'une à l'autre,
- ladite au moins une latte indirecte (15ind) étant guidée par engagement positif le long de la barre de guidage (17).

3. Machine d'emballage selon l'une des revendications précédentes,
**caractérisée en ce que**
- une latte de support à double rangée (15.2) est disposée directement à côté de l'une des deux lattes de support à une rangée (15.1),
- la latte de support à double rangée (15.2) et la latte de support à une rangée (15.1) opposée à celle-ci sont fixés dans le sens transversal au corps de base (14A),
- une latte de support à double rangée (15.2) est disposée à l'extérieur, à côté des deux lattes de support fixes dans le sens transversal (15),
en particulier
- à l'état initial, les deux lattes de support à une rangée (15.1) sont en contact l'une avec l'autre, mais elles sont à une distance initiale des lattes de support à double rangée adjacentes (15.2) et entre elles
et/ou
- la latte de support à une rangée non fixe dans le sens transversal (15.1) est une latte directe (15d).

4. Machine d'emballage selon la revendication 3,
**caractérisée en ce que**
- la latte de support à une rangée non fixe dans le sens transversal (15C) peut être déplacée dans le sens transversal (11) au moyen d'un entraînement transversal commandé (16C) qui agit en particulier sur la face frontale de la barre de guidage (17),
- soit les deux lattes de support extérieures à double rangée (15A, 15E) sont mobiles dans le sens transversal (11) au moyen d'un entraînement transversal (16A, 16E) séparé pour chacune d'elles,
- soit les deux lattes de support extérieures à double rangée (15A, 15E) peuvent être déplacées de manière synchrone inverse dans le sens transversal (11) au moyen d'un entraînement transversal commun et d'un mécanisme de synchronisation inverse.
(Solution alternative :)

5. Machine d'emballage selon l'une des revendications précédentes, **caractérisée en ce que**
- une, en particulier respectivement une, latte de support à double rangée (15.2) est disposée directement à côté de l'une des deux lattes de support à une rangée (15.1), chacune pouvant être déplacée transversalement par rapport au corps de base (14A) indépendamment de l'autre,
- une latte de support à double rangée (15.2) espective est disposée à l'extérieur, adjacente à ce paquet, fixe dans le sens transversal par rapport au corps de base (14A),
- en particulier dans l'état initial, les deux lattes de support à une rangée (15.1) sont en contact l'une avec l'autre, mais elles sont à une distance initiale des lattes de support à double rangée voisines (15.2) et entre elles,
dans lequel de préférence
- les deux lattes de support à une rangée (15.1) peuvent être déplacées de manière préférentiellement synchrone inverse dans le sens transversal (11) au moyen d'un premier entraînement transversal (16.1) commandé et d'un mécanisme de synchronisation inverse,
- la latte de support à double rangée (15.2) d'une part et les deux lattes de support à une rangée (15.1) d'autre part peuvent être déplacées ensemble de manière synchrone inverse dans le sens transversal (11) au moyen d'un deuxième entraînement transversal (16.2) commandé et d'un mécanisme de synchronisation inverse.

6. Machine d'emballage selon l'une des revendications précédentes,
dans laquelle les produits (P) à l'intérieur du groupe sont orientés de manière alternée dans le sens longitudinal (10) et/ou dans le sens transversal (11), en particulier debout sur le pied (Pn) ou inversement debout sur la tête (Pi),
**caractérisée en ce que**
- chaque zone d'alimentation (3) comporte un retourneur de produits (6) avec un certain nombre de préhenseurs (G), en particulier de ventouses, en particulier en nombre correspondant à la moitié d'un lot d'alimentation, qui peuvent être déplacés entre une première position de fonctionnement, disposés sur une seule rangée, et une deuxième position de fonctionnement, disposés sur deux rangées de préhenseurs (G), et
- peuvent pivoter autour d'un axe de pivotement horizontal (6'), en particulier conjointement avec le corps de base (6A) du retourneur de produits (6)
et/ou
- le robot d'alimentation (23) comporte un outil (W23) avec au moins une, en particulier deux, rangées de préhenseurs (G), en particulier de ventouses, pour maintenir chacun un produit (P).

7. Machine d'emballage selon l'une des revendications précédentes,
**caractérisée en ce que**
- plusieurs tables d'écartement (14.1 - 14.3) mobiles à l'intérieur de la machine, en particulier indépendamment les unes des autres, sont présentes,
- ledit au moins un entraînement transversal (16) est disposé dans une station d'écartement (7), en particulier une seule, vers laquelle les tables d'écartement (14.1 - 14.3) chargées peuvent être déplacées,
et/ou
- chaque table d'écartement (14.1 - 14.3) peut être déplacée au moyen d'un dispositif de transport (8),
- en particulier le dispositif de transport (8) comprend des chariots (18) qui peuvent être déplacés le long d'un guide, en particulier d'un rail de guidage (19), en particulier indépendamment les uns des autres.

8. Machine d'emballage selon l'une des revendications précédentes,
**caractérisée en ce que**
- il existe plusieurs zones de livraison (2.1, 2.2) et zones d'alimentation (3.1, 3.2), dans lesquelles respectivement une table d'écartement (14) peut être chargée partiellement ou complètement.

9. Machine d'emballage selon l'une des revendications précédentes,
**caractérisée en ce que**
dans l'outil (W23) du robot d'alimentation (23), respectivement une paire de deux préhenseurs (G) adjacents dans le sens transversal (11) sont fixés à un support de paire (23.1 - 23.16) et ces supports de paire (23.1 - 23.16) peuvent être déplacés dans le sens transversal (11) entre la première et la deuxième position de fonctionnement
et/ou
- l'outil (W23) du robot d'alimentation (23) peut être déplacé entre une première position de fonctionnement, dans laquelle les préhenseurs sont disposés en deux rangées de préhenseurs (G) s'étendant dans le sens longitudinal (10), et une deuxième position de fonctionnement, dans laquelle les préhenseurs (G) sont disposés en trois rangées de préhenseurs (G).

10. Machine d'emballage selon l'une des revendications précédentes,
**caractérisée en ce que**
- l'outil (W24) du robot d'évacuation (24) comporte plusieurs rangées de préhenseurs (G), en particulier deux rangées de préhenseurs, en particulier de ventouses, disposées à une distance transversale fixe,
- les préhenseurs (G) adjacents dans le sens transversal (11) et disposés à peu près à la même position longitudinale le long des rangées sont fixés en tant que groupe transversal sur un support de groupe transversal, en particulier un support de paire, et ceux-ci peuvent être déplacés dans le sens longitudinal (10) entre au moins une première position fonctionnelle plus éloignée et la deuxième position fonctionnelle plus rapprochée ou en contact.

11. Machine d'emballage selon l'une des revendications précédentes,
**caractérisée en ce que**
- il existe un tampon pour les produits (P) restant sur la table d'écartement (14) après le remplissage des cartons (K), en particulier avec un nombre inférieur à une rangée de cartons,
- en particulier le tampon sous la forme de rangées de sièges (S) s'étendant dans le sens longitudinal (10), qui se trouvent en particulier dans le sens transversal (11) à une distance de chevauchement, est formé sur un chariot tampon (18*),
- qui peut notamment se déplacer le long d'un rail tampon (19*) et qui peut se déplacer dans le sens de la marche (10*) jusqu'à la position longitudinale de la station d'écartement (7) à une distance transversale telle du robot d'évacuation (24) que ce dernier peut, avec son outil (W24), retirer des produits (PE) du chariot tampon (18*) et les transférer dans des cartons (K).

12. **Procédé** pour créer au moins un groupe de produits (P) à une seule couche et à plusieurs rangées, à partir de produits livrés, en particulier en une ou plusieurs rangées, et pour insérer le groupe ou des parties du groupe sous forme de rangées de cartons dans un suremballage, par exemple un carton (K),
- le nombre de rangées du groupe pouvant être un nombre pair ou impair, en particulier 2, 3 ou 4,
- les produits (P) à l'intérieur du groupe, vus de dessus, se chevauchent partiellement les uns les autres au plus tard lors de leur insertion dans le suremballage dans le sens de la rangée, le sens longitudinal (10), et/ou dans le sens transversal (11) par rapport à celui-ci,
- en particulier, les produits (P) à l'intérieur du groupe sont orientés de manière alternée dans le sens longitudinal (10) et/ou dans le sens transversal (11),
en particulier au moyen d'une machine d'emballage selon l'une des revendications précédentes, dans laquelle
- au moins une table d'écartement (14) est présente, sur laquelle plusieurs lattes de support (15) sont disposées avec seulement une ou deux rangées de sièges pour un produit chacune, de manière réglable en distance transversale les unes par rapport aux autres,
- deux lattes de support à une rangée (15.1) étant disposées l'une à côté de l'autre dans le sens transversal (11) entre deux lattes de support à double rangée (15.2),
**caractérisé en ce que**
les deux lattes de support à une rangée (15.1) peuvent être alternées entre
- une position pour former un groupe avec un nombre pair de rangées dans une position très rapprochée, en particulier en contact,
- et une position plus espacée et très rapprochée en particulier en contact, vers la latte de support à double rangée adjacente (15.2) pour la formation d'un groupe avec un nombre impair de rangées.

13. Procédé selon la revendication 12,
**caractérisé en ce que**
pour former des groupes de 4 rangées, les deux lattes de support à une rangée (15.1) sont placées de manière très rapprochée, en particulier en contact avec ladite une latte de support à double rangée (15.2) adjacente, et de l'autre côté des deux lattes de support à une rangée (15.1), deux lattes de support à double rangée (15.2) sont placées de manière très rapprochée, à une certaine distance des deux lattes de support à une rangée (15.1) dans le sens transversal (11).

14. Procédé selon l'une des revendications de procédé précédentes,
**caractérisé en ce que**
les lattes de support (15) sont disposées de telle sorte que, pour les paquets comportant 2, 3 ou 4 rangées de sièges (S) très rapprochées, la distance transversale entre les rangées de sièges (S) et les lattes de support (15) qui les portent soit toujours la même
et/ou
- les produits (P) sont acheminés vers la table d'écartement (14) par lots d'alimentation de deux rangées,
- les produits (P) étant disposés en alternance dans le lot d'alimentation, aussi bien le long des rangées que transversalement à celles-ci, dans l'une des deux orientations différentes, en particulier sur le pied (Pn) ou sur la tête (Pi).

15. Procédé selon l'une des revendications précédentes,
**caractérisé en ce que**
le lot d'alimentation est produit en
- saisissant une première rangée de produits (P) correspondant à la moitié du nombre d'un lot d'alimentation avec des produits (P) disposés dans une première orientation,
- déplaçant le deuxième produit et chaque autre produit pair de la rangée dans le sens transversal (11) dans une rangée parallèle, de sorte que les produits se trouvent sur une première ligne en zigzag (Z1),
- tous ces produits, en particulier ensemble, sont tournés dans une deuxième orientation,
- saisissant une autre rangée de produits (P) correspondant au nombre de la moitié d'un lot d'alimentation avec des produits (P) présents dans une première orientation,
- déplaçant à partir de cette première rangée retournée, le premier produit et chaque autre produit impair (P) dans le sens transversal (11) dans une rangée parallèle, de sorte que les produits se trouvent sur une deuxième ligne en zigzag (Z2),
- maintenant les produits retournés ensemble entre les produits non retournés (P) en tant que lot d'alimentation.

16. Procédé selon l'une des revendications de procédé précédentes,
**caractérisé en ce que**
- un groupe résiduel de produits (P) restant sur la table d'écartement (14) après le transfert des rangées de cartons dans les cartons (K) est transféré dans un tampon,
- en particulier en faisant tourner le groupe résiduel autour d'un axe vertical,
- après avoir atteint un niveau de remplissage à une couche du tampon, qui comprend au moins une rangée de cartons, de préférence autant de rangées de cartons que l'on peut obtenir à partir d'un groupe d'évacuation, au moins une, de préférence toutes les rangées de cartons réalisables, sont retirées du niveau de remplissage du tampon et, en particulier directement, sont transférées dans des cartons (K).
